# EUROPÄISCHE PATENTSCHRIFT

(11) **EP 3 677 379 B1**
(45) Veröffentlichungstag und Bekanntmachung des Hinweises auf die Patenterteilung: **18.06.2025**
(21) Anmeldenummer: 19219364.7
(22) Anmeldetag: 23.12.2019
(51) Int. Cl.: B24B 23/02

(54) **HANDWERKZEUGMASCHINE**
HAND MACHINE TOOL
MACHINE-OUTIL MANUELLE

(30) Priorität: 27.12.2018 DE 102018251715
(43) Veröffentlichungstag der Anmeldung: 08.07.2020
(73) Patentinhaber: Robert Bosch GmbH, 70442 Stuttgart (DE)
(72) Erfinder: Zieger, Jens, 73776 Altbach (DE)

(56) Entgegenhaltungen:
- EP-A1- 1 466 698
- EP-A1- 1 864 754
- EP-A2- 2 712 705
- WO-A1-2008/153486
- WO-A1-2011/057638
- CN-A- 107 649 973
- CN-U- 204 913 513
- CN-U- 205 817 487
- CN-U- 207 509 035
- DE-A1- 10 130 063
- DE-U1- 29 508 874
- FR-A3- 2 984 198
- KR-B1- 101 627 567
- US-A1- 2003 040 265
- US-A1- 2017 197 289
- US-A1- 2018 015 581
- US-B2- 8 382 559

## Beschreibung

Die vorliegende Erfindung betrifft eine Handwerkzeugmaschine nach dem Oberbegriff des Anspruchs 1, wie z.B. aus der EP1466698 A1 bekannt.

### Stand der Technik

Ferner sei auf die Druckschriften CN 205 817 487 U, EP 2 712 705 A2, WO 2008/153486 A1 und CN 207 509 035 U verwiesen.

### Offenbarung der Erfindung

Es wird eine Handwerkzeugmaschine mit den Merkmalen des Anspruchs 1 vorgeschlagen. Vorteilhafte Ausgestaltungen, Varianten und Weiterbildungen der Erfindung sind den Unteransprüchen zu entnehmen.

Die Erfindung geht aus von einer Handwerkzeugmaschine, insbesondere einem Schleifer, zum gleichzeitigen Antrieb mehrerer Schleifteller, bevorzugt zum gleichzeitigen Antrieb von drei, insbesondere kippbarer, rotierend und/oder oszillierend und/oder zufällig kreisförmig antreibbarer bzw. angetriebener Schleifteller, aufweisend zumindest ein Gehäuseteil, welches Schleiftelleraufnahmebereiche und/oder Öffnungen aufweist in denen oder durch die hindurchragend Schleiftelleraufnahmen oder Abtriebswellen zum Antrieb der Schleifteller angeordnet sind. Es wird vorgeschlagen, dass das zumindest eine Gehäuseteil, zwischen zumindest zwei benachbarten Schleiftelleraufnahmebereichen und/oder Öffnungen zumindest eine Luftführungskanal ausbildet. Der zumindest eine Luftführungskanal ist auf einer Außenseite des Gehäuseteils angeordnet. Die Außenseite ist benachbart zu den Schleiftellern angeordnet. Die Außenseite unterscheidet sich von einer Innenseite, die Antriebsstrankomponenten aufnimmt. Der Luftführungskanal ist als eine Vertiefung bzw. eine Einkerbung ausgebildet, insbesondere eine konkave Vertiefung bzw. Einkerbung. Eine Anzahl der Luftführungskanäle entspricht einer Anzahl der anzutreibenden Schleifteller. Das Gehäuseteil ist insbesondere als einstückiges Gehäuseteil ausgebildet. Es ist beispielsweise ein Kunststoffspritzgussteil oder ein Metallteil. Es grenzt typischerweise in Verbindung mit anderen Gehäuseteilen, insbesondere anderen Gehäuseschalenbauteilen mit denen es zusammen das Gehäuse der Handwerkzeugmaschine bildet, innere Bauteile nach Außerhalb der Handwerkzeugmaschine ab. Das Gehäuseteil grenzt abgesehen von den Öffnungen einen inneren Bereich des Gehäuseteils von einem äußeren Bereich des Gehäuseteils ab. Insbesondere ist unter einem "Luftführungskanal" bzw. einer "Vertiefung" kein Loch und keine Öffnung im Gehäuseteil, insbesondere nicht von Außerhalb nach innerhalb des Gehäuseteils, zu verstehen. Die inneren Bauteile des Gehäuses sind typischerweise ein Antriebsmotor, Getriebebauteile, Elektronikbauteile oder dergleichen. Der Luftführungskanal bzw. die Vertiefung bildet eine Leitstruktur. Sie dient der Luftführung, insbesondere der verlustarmen Luftführung eines Abluftstroms, insbesondere eines Staubabluftstroms. Dieser Abluftstrom kann durch anbringen einer Absaugquelle im Bereich des Gehäuseteils erzeugt werden, insbesondere in Verbindung mit einer Staubabsaughaube. Die Vertiefung ist dazu vorgesehen einen Luftführungskanal zu Formen. Der Querschnitt zwischen dem Gehäuseteil und dem Schleifteller, also der Seite des Schleiftellers, die einer Bearbeitungsfläche bzw. der Schleifmittelaufnahmefläche des Schleiftellers abgewandt ist, wird vergrößert. Die konkave Struktur der Vertiefung vermindert zusätzlich die Reibung des Luftstroms am Gehäuseteil. Sie schafft abgerundete Übergänge und vermindert den Widerstand für den Luftstrom. Durch die Vertiefung wird der Querschnitt für die Luftführung bzw. Staubabsaugung zwischen dem Gehäuseteil und einem Schleifteller vergrößert. Dies ermöglicht eine verlustarme, möglichst gleichmäßige Absaugung von Schleifstaub bzw. eine derartige Luftführung in dem Bereich, wo der Schleifstaub entsteht, insbesondere in dem Bereich rund um den Schleifteller und/oder zwischen benachbarten Schleiftellern.

Gemäß der Erfindung nimmt ein Mass der Vertiefung im Gehäuseteil, von einem Zentrumsbereich des Gehäuseteils nach radial außen in Richtung eines Rands des Gehäuseteils zu. Dadurch kann die Absaugung homogener entlang der Außenfläche des Gehäuseteils erfolgen. Insbesondere kann ein aus dem Zentrumsbereich des Gehäuseteils abgesaugter Staub von allen peripheren Bereichen des Gehäuseteils zugeführt werden.

Es wird vorgeschlagen, dass eine Anzahl an Luftführungskanälen einer Anzahl an Öffnungen und/oder einer Anzahl an Schleiftelleraufnahmen, bzw. einer Anzahl anzutreibender Schleifteller, entspricht, insbesondere wobei die Luftführungskanäle im Zwischenraum zwischen jeweils benachbarten Öffnungen und/oder Schleiftelleraufnahmebereichen angeordnet sind. Beispielsweise weist die Handwerkzeugmaschine insgesamt drei Luftführungskanäle im Zwischenraum zwischen den drei Öffnungen auf. Dadurch kann eine verbesserte Luftführung zur Staubabsaugung im gesamten Bereich zwischen dem Gehäuseteil und den Schleiftellern erzielt werden. Trotz dem, dass die Luft beispielsweise nur von einer Seite am Schleifer abgesaugt wird, kann dennoch eine Staubabsaugung im Bereich aller anzutreibenden Schleifteller verbessert werden.

Des Weiteren wird vorgeschlagen, dass der Luftführungskanal eine berührungsfreie Verkippung der Schleifteller relativ zum Gehäuseteil gewährleistet. Dadurch kann ein möglichst geringer Abstand zwischen dem Schleifteller bzw. den Schleiftellern und dem Gehäuseteil, insbesondere den Öffnungen bzw. Schleiftelleraufnahmen und den Schleiftellern ermöglicht werden. Die Schleifteller bzw. deren äußere Umfangsflächen schlagen trotz geringem Abstand zu den Öffnungen bzw. den Schleiftelleraufnahmen beim Verkippen der Schleifteller nicht am Gehäuseteil an. Somit baut der Schleifer kompakt. Der Schwerpunkt kann näher zum Werkstück bzw. zur Schleiffläche verlagert werden. Die Krafteinleitung eines Bedieners auf die zu schleifende Fläche wird dadurch verbessert. Der Schleifer wird handlicher. Die Erreichbarkeit auch enger oder schwer zugänglicher Bereiche wird mit der Handwerkzeugmaschine bzw. dem Schleifer ermöglicht. Durch die Luftführungskanäle bzw. Vertiefungen wird vorteilhaft sowohl eine Luftkanalbildung als auch eine Verkippungsermöglichung bereitgestellt, wodurch die Anwenderfreundlichkeit verbessert wird.

Die Vertiefung bzw. Vertiefungen ermöglichen einer druckverlustarme bzw. widerstandsarme Absaugung von Schleifstaub. Sie formen Luftführungskanäle, insbesondere Staubabsaugkanälen, und ermöglichen eine homogene Staubabsaugung. Ein Druckverlust des Schleifstaubsaugstroms von der Absaugvorrichtungsanschlussstelle bis zum entferntesten Schleifteller bzw. Rand des Gehäuseteils wird verbessert. Ferner wird eine Kippfreiheit der Schleiftellers bei gleichzeitig kompaktere Bauweise ermöglicht, insbesondere da die kippbaren Schleifteller in die Vertiefungen bzw. Luftführungskanäle kippen können ohne das Gehäuseteil zu berühren.

Es wird vorgeschlagen, dass eine Gehäusetrennkante, insbesondere eine Gehäusetrennfuge, zwischen dem zumindest einen Gehäuseteil und einem weiteren Gehäuseteil insbesondere weiteren Gehäuseschalen, ein Formschlusselement, insbesondere eine Rastnut, zur Aufnahme eines korrespondierenden Formschlusselements, insbesondere eines Rastfortsatzes, einer Staubabsaughaube dient. Dadurch sind keine zusätzlichen Rastelemente wie beispielsweise Gehäuseeinkerbungen, Rastzapfen oder der gleichen am Gehäuseteil des Schleifers erforderlich. Damit ist die Konstruktion einfach. Kosten können eingespart werden. Ästhetisch und haptisch ist der Schleifer damit frei von Aufbauten und/oder anderen mitunter störenden Elementen. Die Staubabsaughaube kann unmittelbar ans Gehäuse des Schleifers angebracht werden. Die Teilezahl bleibt gering.

Es wird vorgeschlagen, dass der bzw. die Luftführungskanäle als weiteres Formschlusselement, insbesondere als Anschlagelement, für ein weiteres korrespondierendes Formschlusselement der Staubabsaughaube dient(en). Dadurch kann die Staubabsaughaube axial noch sicherer am Schleifer positioniert werden. Durch die Außenkontur des Gehäuseteils ist die Staubabsaughaube am Schleifer festgelegt. Betrachtet in radial Umfangsrichtung, im Wesentlichen parallel zur Schleiffläche. Durch das Rastelement und das Formschlusselement bzw. Anschlagelement, welche insbesondere axial beabstandet zueinander angeordnet sind, wird die Staubabsaughaube auch in axialer Richtung sicher fixiert. Korrespondierende Rast- bzw. Formschlusselement an der Staubabsaughaube können dadurch axial betrachtet gering beabstandet zueinander angeordnet werden. Die Staubabsaughaube kann dadurch axial relativ schlank ausgebildet sein.

Ferner weist die Handwerkzeugmaschine eine Staubabsaughaube aufweisend einen Stutzen zur Verbindung mit einer Staubabsaugvorrichtung auf, welcher nach außerhalb der Staubabsaughaube ragt und eine vom Stutzen ausgehende Absaugöffnung, welche zum Inneren der Staubabsaughaube hin geöffnet ist, insbesondere wobei die Staubabsaughaube eine im Wesentlichen dreieckige Geometrie aufweist. Die Staubabsaughaube weist einen Fortsatz im Bereich der Ansaugöffnung zur Querluftstromvermeidung auf, der in das Innere bzw. das Zentrum der Staubabsaughaube ragt. Unter einer Staubabsaughaube ist ein Rahmen zu verstehen, der zur Verbindung mit dem Schleifer vorgesehen ist. Das "Innere" ist insbesondere der Bereich des Zentrums des Rahmens. Die Kontur der Staubabsaughaube bzw. des Rahmens ist zumindest teilweise an die Kontur des Schleifers angepasst, insbesondere ist die Kontur an eine radiale Umfangskontur des Gehäuseteils parallel zur Schleifebene angepasst. Die Staubabsaughaube bzw. der Rahmen ist zur im Wesentlichen spaltarmen Verbindung mit dem Schleifer vorgesehen, insbesondere zur im Wesentlichen spaltarmen Verbindung mit dem Gehäuseteil des Schleifers. Dadurch kann ein Luftstrom zwischen der Gehäuseumfangsfläche des Gehäuseteils und der Staubabsaughaube vermieden werden. Ein "Leckluftstrom" der die Effizienz der Staubabsaugung vermindern würde, wird vermieden. Der Stutzen ist typischerweise zur Verbindung mit einem Schlauch eines Staubsaugers oder dessen Adapterstück vorgesehen. Der Stutzen ist insbesondere zum Anschluss an verschiedene mobile oder stationäre Staubabsaugvorrichtungen vorgesehen. Der Fortsatz dient als Luftleitfläche. Er lenkt einen Saugluftstrom insbesondere aus der Mitte der Staubabsaughaube hin zur Öffnung und vermeidet zumindest teilweise ein Querlufteinströmung quer zur Öffnung. Der Fortsatz ermöglicht die Bildung eines homogeneren Saugluftstroms innerhalb der Haube. Ein Querluftstrom, insbesondere von der der Öffnung abgewandten flächigen Seite des Fortsatzes bzw. des Leitblechs, wird im Bereich der Öffnung verringert. Damit wird der Absaugstrom homogener auf den gesamten abzusaugenden Bereich zwischen dem Gehäuseteil und dem Schleifteller und um die Schleifteller herum verteilt. Im Zwischenraum zwischen den Schleiftellern und dem Gehäuseteil kann so ein homogenerer Unterdruck zum Absaugen des Schleifstaubs erzeugt werden. Der Fortsatz weist ausgehend von der Öffnung eine im Wesentlichen dreieckige (wobei die Spitze des Dreiecks in die Staubabsaughaube hineinragt) oder halbkreisförmige (wobei die Runde Seite des Halbkreises in die Staubabsaughaube hineinragt) Form auf.

Es wird vorgeschlagen, dass der Fortsatz ausgehend von der Staubabsaughaube und/oder der Öffnung eine Haupterstreckungsrichtung in das Innere bzw. Zentrum der Staubabsaughaube aufweist.

Es wird vorgeschlagen, dass der Fortsatz zumindest eine Wandung, insbesondere mehrere Wandungen aufweist, die der Querluftstromverminderung dienen, insbesondere zur Querluststromverminderung von unterhalb der Staubabsaughaube und/oder von seitlich innerhalb der Staubabsaughaube angesaugter Luft. Die Wandung(-en) weist(-en) dabei zumindest eine Erstreckungsrichtung parallel zur Haupterstreckungsrichtung des Fortsatzes auf. Die Wandung(-en) ist orthogonal zum Fortsatz bzw. Leitblech ausgerichtet. Zwischen benachbarten Wandungen und dem Fortsatz kann dadurch ein Luftleitkanal der zur Mitte der Staubabsaughaube hin weist erzeugt werden, insbesondere mit drei begrenzenden Wandungen über einen Winkel von 270°. Eine vierte begrenzende Wandung dieses Kanals, so dass der Kanal allseits radial um die Haupterstreckungsrichtung zumindest teilweise begrenzt ist, kann vorteilhaft das Gehäuseteil des Schleifers bilden, wenn die Staubabsaughaube am Schleifer montiert ist.

Es wird vorgeschlagen, dass der Fortsatz und/oder die Wandung zumindest teilweise seitlich geöffnet ist, insbesondere zur Querluftstromermöglichung in zumindest diesem Bereich. Dadurch kann Schleifstaub von seitlich der Öffnung und innerhalb der Haube, insbesondere axial begrenzt durch das Gehäuseteil des Schleifers, auch von den Seiten, insbesondere den Ecken der Haube, abgesaugt werden.

Es wird vorgeschlagen, dass die Haube, bzw. der Rahmen der Staubabsaughaube flexibel ist, insbesondere zur Ermöglichung einer federelastischen Vorspannung und/oder eines Anpressens der Staubabsaughaube und/oder von Formschlusselementen der Staubabsaughaube und/oder des Rahmens der Haube, an das Gehäuse des Schleifers, insbesondere zur werkzeuglosen und/oder sicheren und/oder spaltarmen Verbindung mit diesem. Dadurch kann ein Anpressen der Staubabsaughaube und/oder von Formschlusselementen der Staubabsaughaube und/oder des Rahmens der Staubabsaughaube an das Gehäuse bzw. das Gehäuseteil des Schleifers erfolgen. Ferner kann die Staubabsaughaube bzw. der Rahmen werkzeuglos und/oder sicheren und/oder spaltarmen mit dem Gehäuseteil verbunden werden. Die Flexibilität ermöglicht eine federelastische Vorspannung der Staubabsaughaube bzw. des Rahmens am Gehäuse bzw. am Gehäuseteil des Schleifers.

Ferner wird vorgeschlagen, dass sich der Rahmen bzw. die Haube von unten nach oben verjüngt, sprich im Bereich der Formschlusselemente zur Verbindung mit den Formschlusselementen der Handwerkzeugmaschine verjüngt ist. Durch wird gewährleistet, dass ein oberer Rand des Rahmens bzw. der Staubabsaughabe möglichst spaltfrei am Gehäuse der Handwerkzeugmaschine anliegen kann, bzw. die Vorspannkraft der Staubabsaughaube in diesem Bereich wirksam ist. Vorteilhaft kann aber auch die Formschlussverbindung zur Handwerkzeugmaschine durch drücken auf den unteren Rand der Staubabsaughaube bzw. des Rahmens geöffnet werden. Diese Form dient aber auch der verbesserten Distanzierung bzw. als Anschlagelement. Zudem kann ein Anschlagen mit der Staubabsaughaube beispielweise an einer Wand durch diese Konstruktion elastisch abgefedert werden.

Die Staubabsaughaube ist im Wesentlichen dreieckig ausgeführt. Die Staubabsaughaube ist abnehmbar auf das Gehäuse, bzw. das Gehäuseteil, insbesondere das Abtriebswellengehäuse aufschiebbar.

Es wird vorgeschlagen, dass die Staubabsaughaube als Distanzhalter und/oder Anschlagschutz für den Schleifer ausgebildet ist. Sie dient somit dem Schleifer als Distanzhalter und/oder Anschlagschutz. Damit wird ein radiales Anstoßen der Schleifteller beispielsweise an einer vertikal zur Schleifebene angeordneten Fläche und eine potentielle Beschädigung dieser Fläche vermieden. Eine Bearbeitung einer Bodenfläche entlang einer Wand oder dergleichen kann durch den Distanzhalter bzw. Anschlagschutz vereinfacht, gleichmäßig und/oder Beschädigungsfrei erfolgen. Ein Verkratzen des Schleifers kann zu Lasten, sprich eines Verkratzens der Haube, vermieden werden.

Ferner wird vorgeschlagen, dass die Staubabsaughaube eine Griffkontur auf der Außenseite der Staubabsaughaube aufweist, wobei die Griffkontur der Silhouettenkontur zumindest eines Bereichs der Handwerkzeugmaschine entspricht. Insbesondere entspricht die Griffkontur zumindest im Wesentlichen der seitlichen Silhouettenkontur des Luftführungskanals bzw. der Vertiefung des Schleifers. Dadurch ist eine vereinfachte Zuordnung der Staubabsaughaube zur Handwerkzeugmaschine möglich. Sofern ein Benutzer mehrere unterschiedlichen Handwerkzeugmaschinen mit möglicherweise unterschiedlichen Hauben besitzt und/oder verwendet, ist eine leichtere Widererkennung bzw. Zuordnung der jeweiligen Staubabsaughaube zur Handwerkzeugmaschine möglich. Es ist aber auch vorstellbar, dass eine Gruppe von Handwerkzeugmaschinen - beispielsweise ein Deltaschleifer und ein Dreitellerschleifer zusammen zumindest teilweise eine gleiche oder zumindest ähnliche Silhouettenkontur aufweisen welche einer Silhouettenkontur zumindest eines Griffbereichs der Staubabsaughaube gleicht oder ähnelt, so dass eine einfache Gruppenzuordnung für den Nutzer möglich ist.

Ferner wird eine Staubabsaughaube vorgeschlagen, die zur lösbaren Verbindung mit dem Gehäuse der Handwerkzeugmaschine mittels zumindest eines Formschluss- und/oder Kraftschluss- und/oder Reibschlusselements ausgebildet ist, wobei die Staubabsaughaube ein elastisches Band, insbesondere ein gummielastisches Band, besonders bevorzugt im Bereich eines Stutzens aufweist. Das elastische Band ist zum Verbinden mit einem Handgriff der Handwerkzeugmaschine vorgesehen. Das elastische Band ermöglicht eine zusätzliche Fixierung der Staubabsaughaube an der Handwerkzeugmaschine. Insbesondere kann dadurch der Stutzen der Staubabsaughaube auf einfache Weise am Handgriff abgestützt werden. Da die Handwerkzeugmaschine bzw. der Schleifer im Verhältnis zum Schlauch des Saugers mitunter relativ leicht ist und/oder der Stutzen der Staubabsaughaube relativ filigran ausgebildet ist, wird durch die zusätzliche Verbindung des elastischen Bands mit der Handwerkzeugmaschine ein versehentliches Abziehen der Staubabsaughaube von der Handwerkzeugmaschine vermieden. Zudem kann die Belastung auf den Übergang zwischen Stutzen und Rahmen verringert werden. Ein Bruch des Rahmens und/oder Stutzens kann vermieden werden.

Die Staubabsaughaube bildet bezogen auf die Schleifebene eine Hüllkontur um sämtliche Schleifteller. Sie bildet ferner eine Hüllkontur um sämtliche Werkzeugaufnahmen. Sie bildet vorteilhaft eine Hüllkontur um das Gehäuse im Bereich der Schleifteller bzw. das Gehäuseteil. Dadurch kann ein Unterdruckbereich bei Anschluss einer Staubabsaugung an den Stutzen im Bereich der Schleifteller gebildet werden. Die Staubabsaughaube überlappt das Gehäuse axial ausgehend von der Schleifebene. Die Staubabsaughaube ist von den Schleiftellern derart beabstandete, dass es im Betrieb zu keinem Kontakt zwischen diesen kommt. Damit ist ein einfaches, bedienerfreundliches arbeiten mit der Handwerkzeugmaschine möglich.

Es wird vorgeschlagen, dass ein Luftführungskanal, insbesondere eine Vertiefung, des Gehäuseteils und der Fortsatz der Haube, im Verbundenen Zustand von Handwerkzeugmaschine und Haube, einen durch sie begrenzten Saugkanal bilden. Dadurch wird ein widerstandsarmer Luftstrom und/oder ein verminderter Querluststrom erzeugt. Dies dient der verbesserten Absaugung sowie einer homogeneren Druckverteilung im Bereich aller Schleifteller des Schleifers.

### Zeichnungen

Nachfolgend wird die Erfindung anhand von in den Zeichnungen dargestellten Ausführungsbeispielen näher erläutert. Es zeigen:
- Fig. 1: die Handwerkzeugmaschine in einer Frontansicht;
- Fig. 2: die Handwerkzeugmaschine in einer Schnittdarstellung A-A;
- Fig. 3: die Handwerkzeugmaschine in einer Schnittdarstellung B-B;
- Fig. 4: die Handwerkzeugmaschine in einer Seitenansicht in einer Ruheposition;
- Fig. 5: die Handwerkzeugmaschine in einer Seitenansicht;
- Fig. 6: die Handwerkzeugmaschine in einer Rückansicht;
- Fig. 7: die Staubabsaughaube in einer perspektivischen Ansicht;
- Fig. 8: Handwerkzeugmaschine und Staubabsaughaube in einer Seitenansicht;
- Fig. 9a-: ddieHandwerkzeugmaschine in einer schraffierten Darstellung in vier Ansichten;
- Fig. 10: die Schnittfläche bzw. das Schnittflächenverhältnis eines eingeschnürten und eines ausgedehnten Bereichs der Handwerkzeugmaschine;
- Fig. 11: die Handwerkzeugmaschine in einer perspektivischen Darstellung.

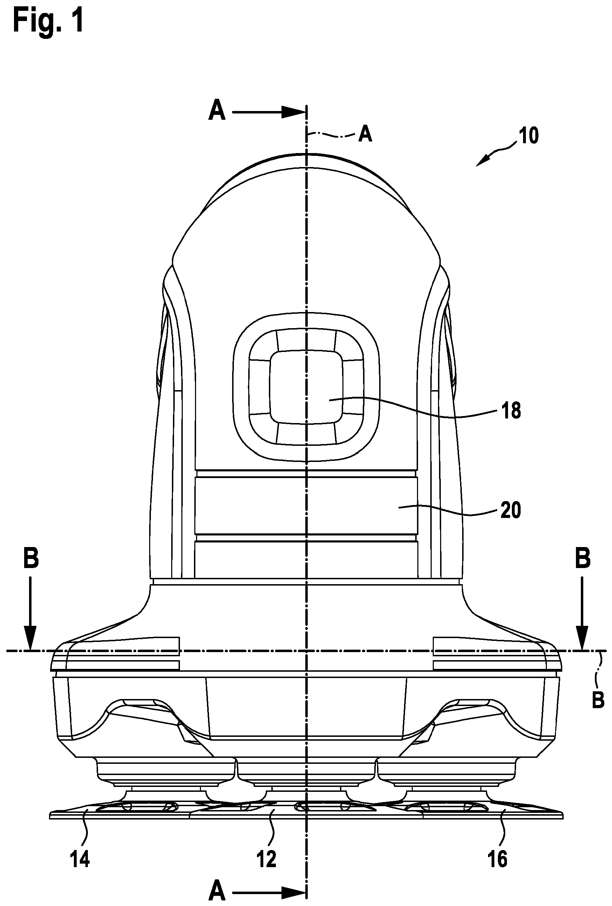

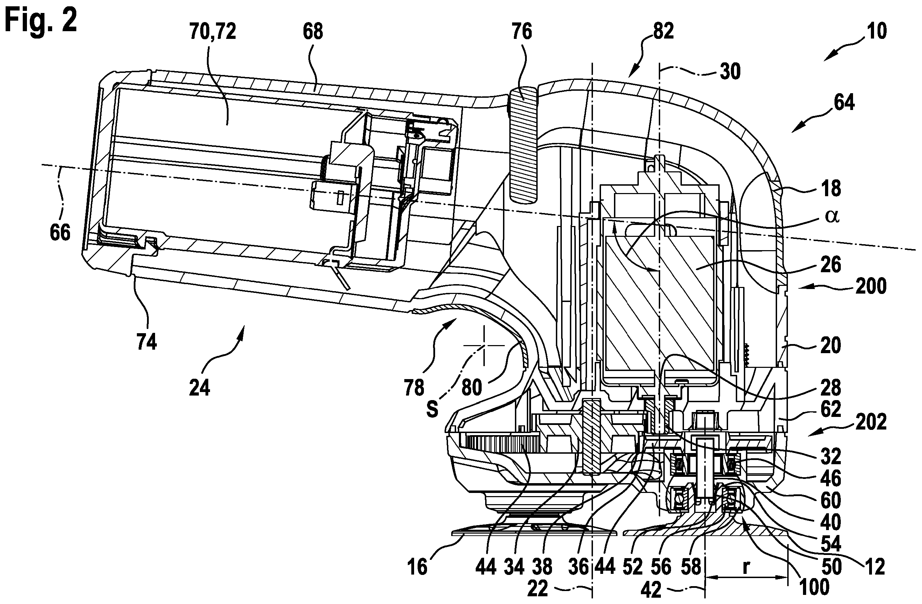

Fig. 1 zeigt die Handwerkzeugmaschine in Form eines Schleifers 10 in einer Frontansicht. Der Schleifer 10 ist zum gleichzeitigen Antrieb von drei Schleiftellern 12, 14, 16 vorgesehen. Einem frontseitigen Schleifteller 12 und zwei rückwärtigen Schleiftellern 14, 16. Durch eine gelenkwellenartige oder kardanische Aufhängung (vgl. Fig. 2) der Schleifteller 12, 14, 16 sind diese schwenkbar bzw. kippbar gelagert. Sie werden rotierend angetrieben und sind zum Schleifen auch gewölbter Flächen gut geeignet. Über ein Betätigungsschalter 18 ist der Schleifer 10 aktivierbar. Ein Kennzeichnungselement 20 ordnet dieses Gerät vorteilhaft einer Gerätebaureihe bzw. einem Hersteller zu.

Fig. 2 zeigt die Handwerkzeugmaschine in Form des Schleifers 10 in einer Schnittdarstellung A-A durch die Ebene A (vgl. Fig. 1). Der fronseitige Schleifteller 12 ist vor einer Zentralradachse 22 angeordnet. Er ist bezogen auf eine Zentralradachse 22 gegenüber einem Handgriff 24 angeordnet. Die zwei rückwärtigen Schleifteller 14, 16, von denen in dieser Darstellung nur der Schleifteller 16 zu sehen ist, sind auf einer dem Handgriff 24 zugewandten Seite der Zentralradachse 22 angeordnet. Die drei Schleifteller 12, 14, 16 sind baugleich und austauschbar ausgebildet. Ein Motor 26 weist eine Antriebswelle 28 auf. Der Motor 26 bzw. dessen Antriebswelle 28 gibt eine Motorwellenachse 30 vor. Über ein Ritzel 32 treibt der Motor 26 ein Zentralrad 34 an, das die Zentralradachse 22 vorgibt. Das Zentralrad 34 wird über ein Stirnrad 36 vom Ritzel 32 angetrieben. Das Zentralrad 34 weist eine Verzahnung 38 auf mit der es drei Abtriebswellen 40 antreibt, wovon im Schnitt A-A nur die vordere zu sehen ist. Diese Abtriebswellen 40 geben wiederum Abtriebswellenachsen 42 vor. Jede Abtriebswelle 40 ist wiederum zum zumindest mittelbaren Antrieb je eines Schleiftellers 12, 14, 16 vorgesehen. Das Zentralrad 34 treibt über die Verzahnung 38 drei Stirnräder 44 an, (wovon das den Schleifteller 12 antreibende Stirnrad 44 im Schnitt und das den Schleifteller 16 antreibende Stirnrad 44 in der Seitenansicht zu sehen ist). Das frontseitige Stirnrad 44 treibt die Abtriebswelle 40 an; der Antriebsmechanismus ist analog auf alle, die Schleifteller 12, 14, 16 antreibenden Stirnräder 44 zu übertragen. Die Abtriebswelle 40 ist hier beispielhaft über zumindest ein Rillenkugellager 46 in einem Gehäuseteil 60 gelagert. Ein Gleitlager 48 stützt die Abtriebswelle 40 zusätzlich in einem weiteren Gehäuseteil 62 ab. Die beiden Gehäuseteile 60, 62 bilden ein Abtriebswellengehäuse 202. Das Abtriebswellengehäuse 202 bildet zusammen mit einem Motorgehäuse 200, das im Wesentlichen den Motor 26 umschließt ein Hauptgehäuse 64 aus, welches zumindest den Motor 26, das Zentralrad 34 und die An- und Abtriebswellen 28, 40 aufnimmt. Die Abtriebswelle 40 greift über einen Mitnehmer 50 in Koppelungsmittel 52 des Schleiftellers 12. Der Schleifteller 12 kann mittels Rasthaken 54 in eine Schleiftelleraufnahme 56 geklipst werden. Die Schleiftelleraufnahme 56 ist im Bereich einer Öffnung 100 des Gehäuseteils 60 angeordnet. Durch die Öffnung 100 kann das Koppelungsmittel 52 des Schleiftellers 12 bzw. die Rasthaken 54 in die Schleiftelleraufnahme 56 bzw. auf den Mitnehmer 50 gesteckt werden. Die Schleiftelleraufnahme 56 ermöglicht nebst der reibungsarmen Rotationslagerung des Schleiftellers 12 (hier mit Rillenkugellager 58) auch eine Verschwenkung (hier durch ein sphärisches Gleitlager in einer kugelförmigen Aufnahme des Gehäuseteils 60). Der gelekwellenartige Antrieb ermöglicht ein Verkippen des Schleiftellers 12 gegenüber dem Gehäuseteil 60 bzw. relativ zum Schleifer 10. Das Zentralrad 34 treibt die Schleifteller 12, 14, 16 zwangsweise rotierend an. Prinzipiell ist aber auch ein oszillierender Antrieb oder ein zufällig kreisförmiger Antrieb der Schleifteller 12 möglich, beispielsweise durch im Stirnrad 44 exzentrisch aufgenommene Abtriebswellen 40 welche die Schleifteller 12, 14, 16 zwangsgekoppelt oder zufällig rotierend antreiben, oder ein Exzenter der durch die Einschränkung von Freiheitsgraden des Schleiftellers und/oder der Abtriebswelle eine Oszillationsbewegung erzeugt - oder dergleichen (hier nicht näher dargestellt).

Die Antriebswelle 28 bzw. die Motorwellenachse 30 ist exzentrisch zum Zentralrad 34 bzw. zur Zentralradachse 22 angeordnet. Sie ist zwischen der frontseitigen Abtriebswellenachse 42 und der Zentralradachse 22 angeordnet. Beide Achsen 22, 30 werden durch die Ebene A geschnitten bzw. kommen in ihr zum Liegen. Der Motor 26 ist in Richtung des frontseitigen Schleiftellers 12 bzw. dessen Schleiftelleraufnahme 56 verlagert. Der Motor 26 bzw. dessen Motorwellenachse 30, ist bezogen auf die Zentralradachse 22 gegenüber dem Handgriff 24 angeordnet. Der Handgriff 24 wird durch die Ebene A ebenfalls mittig geschnitten, idealerweise spiegelsymmetrisch geteilt. Die Motorwellenachse 30, die Zentralradachse 22 und die Abtriebswellenachsen 42 sind parallel zueinander ausgerichtet. Quer zur Zentralradachse 22 ist die Handgriffachse 66 bzw. die Zentrumsachse 86 oder Längsachse 84 des insbesondere stabförmigen Handgriffs 24 angeordnet. Der Winkel α beträgt rund 45-135°, im vorliegenden Ausführungsbeispiel rund 100°. Der Handgriff 24 steht vom Hauptgehäuse 64 ab. Die Ebene A bzw. die Schnittebene A-A wird gewissermaßen auch durch die Handgriffachse 66 und die Zentralradachse 22 aufgespannt. Der Handgriff 24 ist stabförmig, im Wesentlichen rund oder oval oder dergleichen. Er wird durch das Handgriffgehäuse 68 gebildet, welches zumindest teilweise einstückig mit dem Hauptgehäuse 64 ausgebildet sein kann. Der Handgriff 24 ist zur Aufnahme eines Akkumulators 70 vorgesehen. Dieser kann permanent integriert, oder als wechselbarer Akkumulator 70 ausgebildet sein. Im vorliegenden Ausführungsbeispiel ist er als wechselbarer Einschubakkumulator 72 ausgebildet. Er wird in das frei Ende 74 des Handgriffs 24 eingeschoben und ist über hier nicht dargestellte Rastelemente lösbar mit dem Handgriffgehäuse 68 verbunden. Optional lässt sich über ein Einstellrad 76 eine Drehzahl des Motors 26 einstellen. Ferner sind der Handgriff 24 und das Hauptgehäuse 64 ergonomisch geformt. Die konkave Einkerbung 78 im Übergang vom Handgriff 24 zum Hauptgehäuse 64 dient der intuitiven Umgreifung mit dem Zeigefinger. Dieser Bereich kann auch mit einem Softgripp 80 überzogen sein. Selbstverständlich können auch andere Bereich der Handwerkzeugmaschine mit speziell haptischen und/oder taktilen Werkstoffen überzogen sein. Aber auch die Oberseite 82 des Hauptgehäuses 64 ist zur Auflage einer Hand insbesondere der Handinnenfläche vorgesehen, sei es um die Handwerkzeugmaschine zweihändig oder einhändig, einzig durch Umgreifen des Hauptgehäuses 64, zu führen.

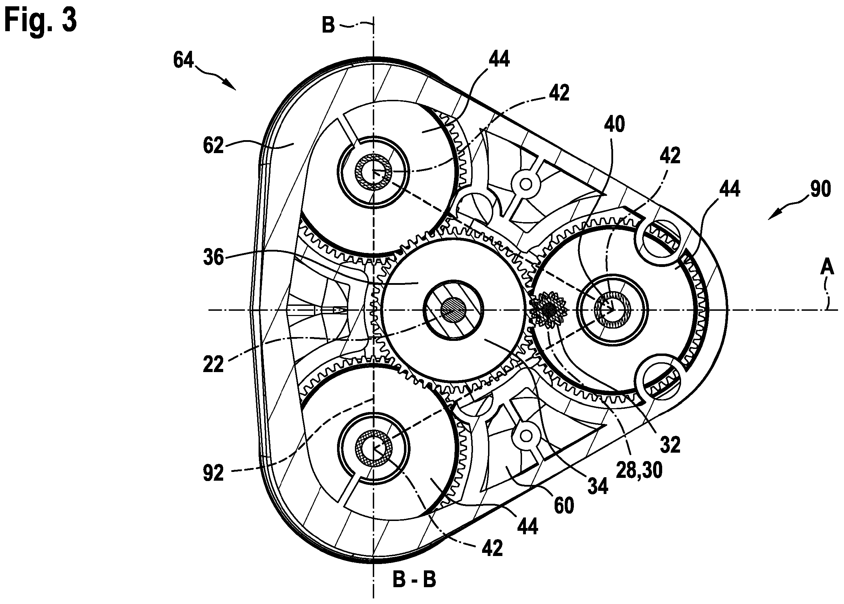

Fig. 3 zeigt den Schleifer aus Fig. 1 in einer Schnittdarstellung B-B in der Ebene (B). Die Antriebswelle 28 treibt über das Ritzel 32 das Zentralrad 34 an. Die Motorwellenachse 30 und damit der Motor 26 ist exzentrisch zum Zentralrad 34 angeordnet. Und zwar in Richtung einer Frontseite 90 des Schleifers 10 verlagert. Die Zentralradachse 22, die Motorwellenachse 30 und die Abtriebswellenachse 42 der frontseitigen Abtriebswelle kommen in der Ebene A zum Liegen. Orthogonal zu dieser Ebene A ist die Ebene B aufgespannt. In der Ebene B kommen die spiegelsymmetrisch zur Ebene A angeordneten Abtriebswellen 40 zum Liegen. Die Zentralradachse 22 ist im Zentrum eines regelmäßigen Dreiecks 92 angeordnet, in dessen Ecken die drei Antriebswellenachsen 42 angeordnet sind. Über das Zentralrad 34 werden die drei Stirnräder 44 rotierend angetrieben. Die Stirnräder 44 treiben wiederum die Abtriebswellen 40 an, welche zumindest mittelbar die Schleifteller 12, 14, 16 oder Schleiftelleraufnahmen 56 (vgl. Fig. 2) antreiben. Ferner sind Teile des Hauptgehäuses 64 bzw. des Gehäuseteils 60 und des weiteren Gehäuseteils 62 dargestellt, welche die An- und Abtriebselemente des Schleifers 10 in Position halten.

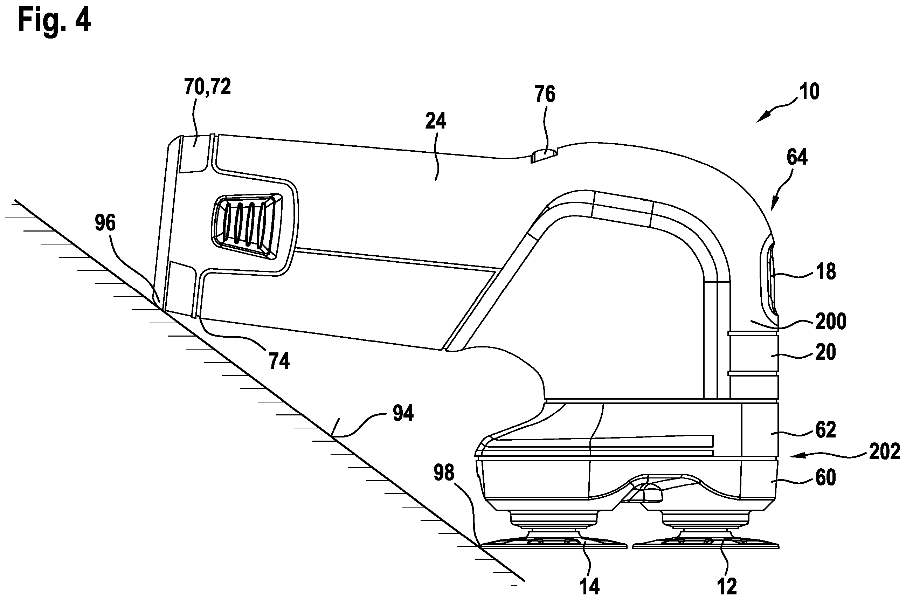

Fig. 4 zeigt den Schleifer 10 in einer Ruheposition auf einer Auflagefläche 94, beispielsweise einem zu bearbeitenden Werkstück. Der Schleifer 10 liegt auf drei Punkten auf, nämlich auf einem freien Ende 96 des einschiebbaren Akkumulators 70 (alternativ könnte er auch auf dem freien Ende 74 des Handgriffs 24 aufliegen, insbesondere bei einem fest im Handgriff 24 verbauten Akkumulator 70) und auf dem Rand 98 der rückwärtigen Schleifteller 14, 16, insbesondere der zwei dem freien Ende 74, 96 des Handgriffs 24 bzw. Einschubakkumulators 72 zugewandten Rand 98 der Schleifteller 14, 16 (wobei nur der Schleifteller 14 sichtbar ist, da er den Schleifteller 16 verdeckt). Prinzipiell sind für gleiche Bauteile aus der unterschiedlichen Figuren die gleichen Bezugszeichen vergeben, sie werden aber nicht zwangsläufig zu jeder Figur erneut erläutert.

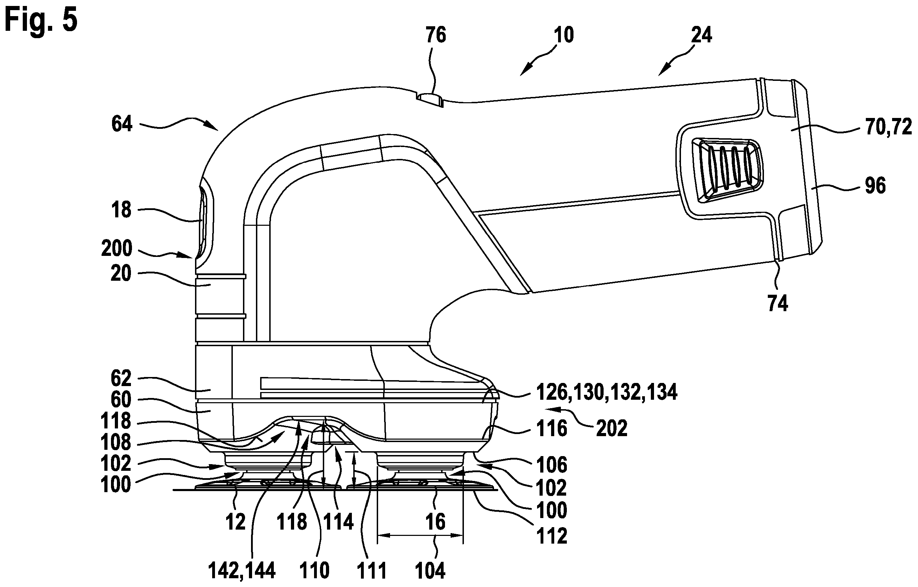

Fig. 5 zeigt die Handwerkzeugmaschine bzw. einen Schleifer 10 in einer Seitenansicht. Das Gehäuseteil 60 weist drei Schleiftelleraufnahmebereiche 102 auf, wovon in der Fig. 5 nur zwei zu sehen sind. Als Schleiftelleraufnahmebereich 102 sei der Bereich des Gehäuseteils 60 definiert, der die Schleiftelleraufnahme 56 und deren Bauteile wie beispielsweise Lager stützt. Exemplarisch ist dies der Bereich mit dem Hüllkreisdurchmesser 104 um den Schleiftelleraufnahmebereiche 102. Im vorliegenden Ausführungsbeispiel ist dieser Bereich von einem insbesondere unmittelbar umliegenden Gehäusebereich 106 des Gehäuseteils 60, in Richtung der Schleifebene 112 abgesetzt (zur Aufnahme der Lager, einer besseren Zugänglichkeit und/oder zur Verbesserung der Bewegungsfreiheit der Schleifteller 12, 14, 16 z.B. beim Verkippen/Verschwenken). Anders ausgedrückt, ist der/die umliegende(n) Gehäusebereich(e) 106 von dem/den Schleiftelleraufnahmebereich(en) 102 zurückgesetzt. Dieser Rückversatz ist jedoch nicht als eine Vertiefung 108 im Sinne der Erfindung zu verstehen. Die Schleiftelleraufnahmebereiche 102 weisen jeweils Öffnungen 100 auf, durch die die abnehmbaren Schleifteller 12, 14, 16 mit dem Schleifer 10 verbunden werden können. So können die Koppelungsmittel 52 und/oder Rasthaken 54 mit den Abtriebswellen 40 und/oder Schleiftelleraufnahmen 56 verbunden werden (vgl. Schnittdarstellung Fig. 2). Alternativ können aber auch die Schleiftelleraufnahmen 56 oder die Abtriebswellen 40 durch die Schleiftelleraufnahmebereiche 102 hindurchragen. Sofern nur Abtriebswellen 40 durch das Gehäuseteil ragen, sei es, weil die Aufnahme der Schleifteller 12, 14, 16 außerhalb des Gehäuseteils 60 der Handwerkzeugmaschine erfolgt, oder weil die Schleifteller 12, 14, 16 unlösbar mit den Abtriebswellen 40 verbunden sind, kann unter dem Schleiftelleraufnahmebereich 102 auch nur der Bereich verstanden werden, der die Öffnung 100 darstellt; oder der Bereich der die Abtriebswellen 40 im Gehäuseteil 60 der Handwerkzeugmaschine lagert.

Zwischen zwei benachbarten Schleiftelleraufnahmebereichen 102 bzw. den Öffnungen 100 (sozusagen im Zwischenraum 122) weist das Gehäuseteil 60 einen Luftführungskanal 120 auf. Dieser wird durch eine Vertiefung 108 gebildet. Im Bereich des Luftführungskanals 120 bzw. der Vertiefung 108 ist der Abstand 110 zwischen dem Gehäuseteil 60 und einer Schleifebene 112 vergrößert, insbesondere vergrößert gegenüber dem Abstand 111 des Gehäusebereichs 106 zur Schleifebene 112. Die Vertiefung 108 ist demnach zurückversetzt gegenüber dem Gehäusebereich 106. Die Vertiefung 108 weist eine konkave Form 118 auf. Sie läuft in Richtung des Zentrums des Gehäuseteils 60 zu, bzw. wird in Umfangsrichtung enger. Zudem nimmt ein Ausmaß der Vertiefung in dieser Richtung ab. Das Gehäuseteil 60 ist also in die der Schleifebene 112 abgewandte Richtung eingezogen oder eingekerbt. Ausgehend von einem Zentrumsbereich 114 des Gehäuseteils 60, insbesondere einem Zentrumsbereich 114 im Zentrum zwischen den Schleiftellern 12, 14, 16 bzw. im Bereich der das Gehäuseteil 60 schneidenden Zentralradachse 22, nimmt der Abstand 110 zwischen Gehäuseteil 60 und Schleifebene 112 entlang der des Luftführungskanals, bzw. der Vertiefung 108, in radialer Richtung nach außen, also in Richtung des Randes 116 des Gehäuseteils 60, zu. Die Vertiefung 108 ist im äußeren Bereich des Gehäuseteils 60 also größer als in einem mittleren Bereich. Die Vertiefung 108 dient der besseren Luftführung. Die Vertiefung 108 bildet zumindest einen Teil eines Luftführungskanals 120, insbesondere zur Staubabsaugung.

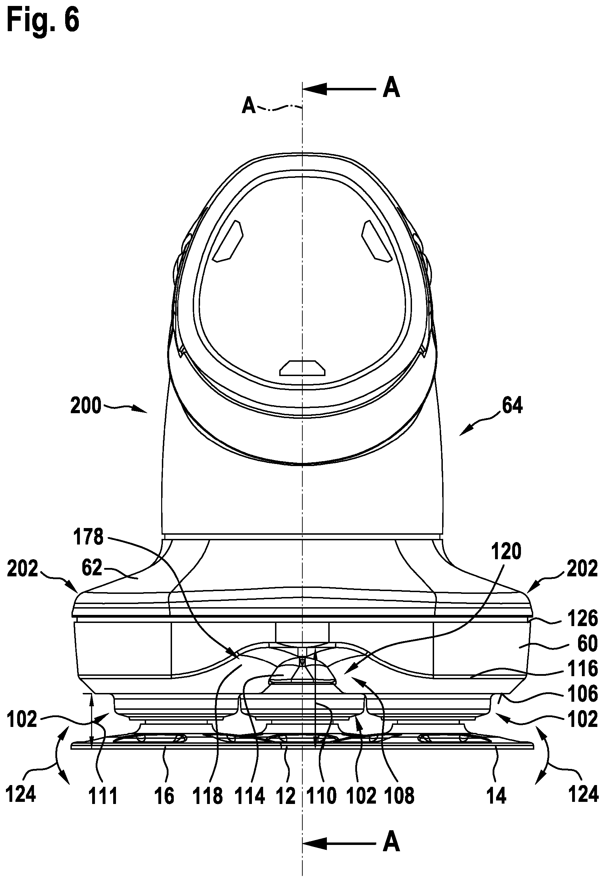

Analog zur Vertiefung 108 zwischen den Schleiftellern 12, 16 (front- und rückwärtigem Schleifteller) bzw. den zugehörigen Schleiftelleraufnahmebereichen 102, ist auch zwischen den rückwärtigen Schleiftellern 14, 16 bzw. den zugehörigen Schleiftelleraufnahmebereichen 102, eine Vertiefung 108 vorgesehen (vgl. Fig. 6). Der Fig. 6, die diese Vertiefung in der Rückansicht zeigt, ist ebenfalls zu entnehmen, dass die Vertiefung bzw. der Abstand 110 vom Zentrumsbereich 114 des Gehäuseteils 60 zum Rand 116 des Gehäuseteils 60 bzw. vom Zentrum nach radial außen zunimmt. Die rückwärtige Vertiefung 108 ist spiegelsymmetrisch zur Ebene A aufgebaut (vergleiche auch Schnitt A-A gemäß Fig. 2). Die Vertiefung 108 ermöglicht zudem eine berührungsfreie Verkippung 124 der Schleifteller 12, 14, 16 relativ zum Gehäuseteil 60. Somit reibt beispielsweise im Betrieb des Schleifers 10 nicht ein Rand des Schleiftellers 12, 14, 16 am Gehäuseteil 60. Die drei Vertiefungen 108 zwischen den Schleiftellern 12, 14, 16 bzw. den Schleiftelleraufnahmen 56 sind ausgehend vom Zentrum jeweils um 120° versetzt zueinander angeordnet. Sie sind jeweils spiegelsymmetrisch zu den Winkelhalbierenden des gleichmäßigen Dreiecks.

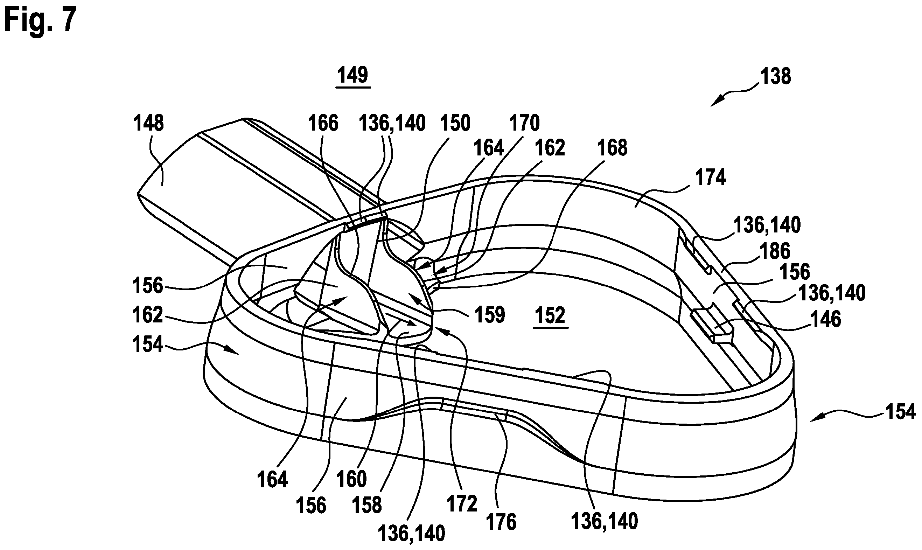

Fig. 5 und 6 zeigen zudem eine Gehäusetrennkante 126. Die Gehäusetrennkante 126 ist zwischen dem Gehäuseteil 60 und dem weiteren Gehäuseteil 62 angeordnet. Beide Gehäuseteile 60, 62 sind Teil des Abtriebswellengehäuses 202 bzw. des Hauptgehäuses 64. Die Gehäusetrennkante 126 stellt insbesondere eine Gehäusetrennfuge 130 dar. Die Gehäusetrennkante 126 bzw. die Gehäusetrennfuge 130 wird durch zusammengesetzte Gehäuseschalen der Handwerkzeugmaschine bzw. des Schleifers 10 gebildet. Sie bildet eine Rückversatz in der Gehäuseoberfläche. Sie ist umlaufend um das Abtriebswellengehäuse 202. Sie stellt ein Formschlusselement 132 insbesondere eine Rastnut 134, zur Aufnahme eines korrespondierenden Formschlusselements 136 einer Staubabsaughaube 138 (vgl. Fig. 7) dar, bevorzugt eines Rastfortsatzes 140 einer Staubabsaughaube 138 dient. Das Formschlusselement 132 kann anstatt einer Nut bzw. Vertiefung prinzipiell auch eine Ausstülpung bzw. männliches Formschlusselement darstellen. Ebenso kann an der Staubabsaughaube 138 anstatt eines männlichen ein weibliches Formschlusselement vorgesehen sein. Ferner dient die Vertiefung 108 im Gehäuseteil 60 als weiteres Formschlusselement 142, insbesondere als Anschlagelement 144 für ein weiteres korrespondierendes Formschlusselement 146 an der Staubabsaughaube 138. Beim vorgesehenen Aufstecken der Staubabsaughaube 138 von der Schleiftellerebene 112 auf das Abtriebswellengehäuse 202 bzw. überstülpen über das Gehäuseteil 60 dienen das bzw. die Formschlusselemente 146 als Anschlag bzw. als Stopper. Somit wird die Staubabsaughaube 138 nicht zu weit auf das Abtriebswellengehäuse 202 aufgeschoben. Sobald die Formschlusselemente 146 anschlagen, rasten auch die Formschlusselemente 136 in ihre vorgesehene Position bzw. in die korrespondierenden Formschlusselemente 132 ein.

Fig. 7 zeigt die Staubabsaughaube 138 der Handwerkzeugmaschine in einer perspektivischen Ansicht.

Die Staubabsaughaube 138 weist einen Stutzen 148 zur Verbindung mit einer Staubabsaugvorrichtung (hier nicht dargestellt) auf - typischerweise einen mobilen oder stationären Staubsauger bzw. Staubabsaugvorrichtung. Der Stutzen 148 ragt nach außerhalb 149 der Staubabsaughaube 138. Die Staubabsaughaube 138 weist eine vom Stutzen 148 ausgehende Absaugöffnung 150 auf, welche zum Inneren 152 der Staubabsaughaube 138 geöffnet ist. Die Staubabsaughaube 138 weist eine im Wesentlichen dreieckige Geometrie auf, insbesondere eine im Wesentlichen regelmäßige dreieckige Geometrie. Unter im Wesentlichen soll hier verstanden werden, dass die Ecken 154 des "Dreiecks" wie in Fig. 7 dargestellt abgerundet sein können. Zudem können die Schenkel 156 auch bedingt von einer geraden Form abweichen, beispielweise leicht bogenförmig oder dergleichen sein.

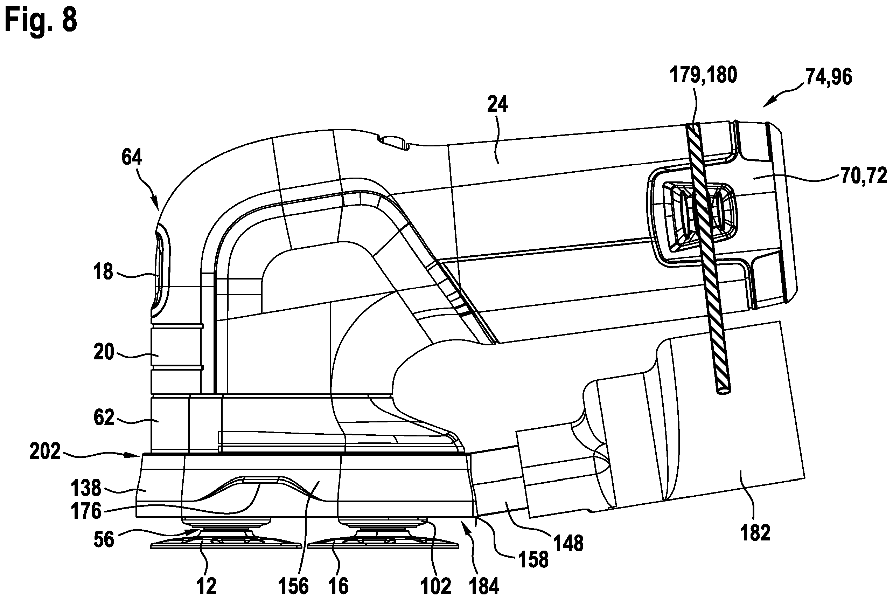

Im Bereich der Absaugöffnung 150 weist die Staubabsaughaube 138 einen Fortsatz 158 auf. Dieser dient der Querluftstromvermeidung, insbesondere von unterhalb 184 (vgl. Fig. 8) des Fortsatzes 158, also unterhalb der der Absaugöffnung 150 abgewandten Seite des Fortsatzes 158. Der Fortsatz 158 ragt in das Innere 152 der Staubabsaughaube 138. Der Fortsatz 158 weist ausgehend von der Absaugöffnung 150 eine Haupterstreckungsrichtung 160 in das Innere 152 der Staubabsaughaube 138 auf. Ferner weist der Fortsatz 158 zumindest eine, insbesondere zwei Wandungen 162 auf. Diese dient/dienen der Querluftstromverminderung, insbesondere der Querluststromverminderung von unterhalb 184 der Staubabsaughaube 138 und/oder von seitlich 164 innerhalb der Staubabsaughaube 138. Der Fortsatz 158 und/oder die Wandung 162 kann aber auch zumindest teilweise seitlich 166, 168 geöffnet sein, insbesondere zur Querluftstromermöglichung in zumindest diesem Bereich 170, 172. Der Fortsatz 158 bildet einen Teil eines Luftführungskanals 159. Insbesondere bilden der Teil des Luftführungskanals 120 und der andere Teil des Luftführungskanal 159 gemeinsam einen Luftführungskanal 120, 159 aus.

Die Staubabsaughaube 138, bzw. der Rahmen 174 der Staubabsaughaube 138 ist flexibel, insbesondere quer zur Unter- oder Oberseite der Staubabsaughaube 138 bzw. in Richtung des Inneren 152 oder des Äußeren 149 der Staubabsaughaube 138. Dies ermöglicht eine federelastische Vorspannung und/oder ein Anpressen der Staubabsaughaube 138 an die Handwerkzeugmaschine, insbesondere den Schleifer 10, bzw. dessen Gehäuse. Dadurch kann eine werkzeuglose und/oder sichere und/oder spaltarmen Verbindung mit dem Schleifer 10 hergestellt werden.

Der Rahmen 174 bzw. die Staubabsaughaube 138 verjüngt sich von unten nach oben. Im Bereich der Formschlusselemente 136, zur Verbindung mit den Formschlusselementen 142 der Handwerkzeugmaschine, ist der Rahmen 174 bzw. die Staubabsaughaube 138 verjüngt. Dadurch wird gewährleistet, dass ein oberer Rand 186 des Rahmens 174 bzw. der Staubabsaughaube 138 möglichst spaltfrei am Gehäuse der Handwerkzeugmaschine anliegen kann. Die Vorspannkraft der Staubabsaughaube 138 in diesem Bereich kann so besonders effizient wirken.

Ferner kann die Staubabsaughaube 138 als Distanzhalter und/oder Anschlagschutz für die Handwerkzeugmaschine bzw. den Schleifer ausgebildet sein (vgl. auch Fig. 8). Anstatt des Gehäuses des Schleifers 10 dient der Rahmen 174 bzw. die abgerundeten Ecken 154 und/oder Schenkel 156 als Anschlagschutz. Die Staubabsaughaube 138 weist auch eine Griffkontur 176 auf. Die Griffkontur 176 stellt eine leichte Erhebung auf dem Schenkel 156 bzw. dem Rahmen 174 dar. Die Reibung zwischen Finger und Staubabsaughaube 138 beim Aufdrücken oder abziehen der Staubabsaughaube 138 auf den oder von dem Schleifer 10, wird dadurch verbessert. Zudem gleicht die Griffkontur 176 der Silhouettenkontur 178 zumindest eines Bereichs der Handwerkzeugmaschine bzw. des Schleifers (vgl. Fig. 5 und 6). Die Silhouettenkontur wird dabei durch die Kontur des Randes 116 des Gehäuseteils 60, insbesondere im Bereich der Vertiefung 108, gebildet, insbesondere bei einer seitlichen Betrachtung des Randes 116 bzw. des Schleifers 10.

Fig. 8 stellt die Handwerkzeugmaschine bzw. Schleifer 10 mit verbundener bzw. aufgesteckter Staubabsaughaube 138 dar. Nebst den bereits beschriebenen Bauteilen, weist die Staubabsaughaube 138 oder die Handwerkzeugmaschine bzw. der Schleifer 10 ein insbesondere elastisches Verbindungselement 179, insbesondere ein elastisches Band 180, bevorzugt ein gummielastisches Band 180 zum Verbinden des Stutzens 148 bzw. eines Stutzenadapters 182 und dem Schleifers 10 auf. Das elastische Band 180 ist, insbesondere zwischen einem freien Ende 74, 96 des Handgriffs 24 bzw. Akkumulators 70, 72 des Schleifers 10 und dem Stutzen 148 oder Stutzenadapter 182 gespannt. Bevorzugt ist das elastische Band verliersicher am Stutzten 148, Stutzenadapter 182 oder dem Handgriff 24 befestig. Hier beispielsweise durch ankleben oder anspritzen am Stutzenadapter. Alternativ kann das Band auch einseitig lösbar sein, so dass es im geöffnet Zustand an oder um das jeweils andere Bauteil angeschlagen bzw. umgeschlagen werden kann und wieder fixiert werden kann - z.B. mit einem Druckknopf, einem Verriegelungsmechanismus oder dergleichen.

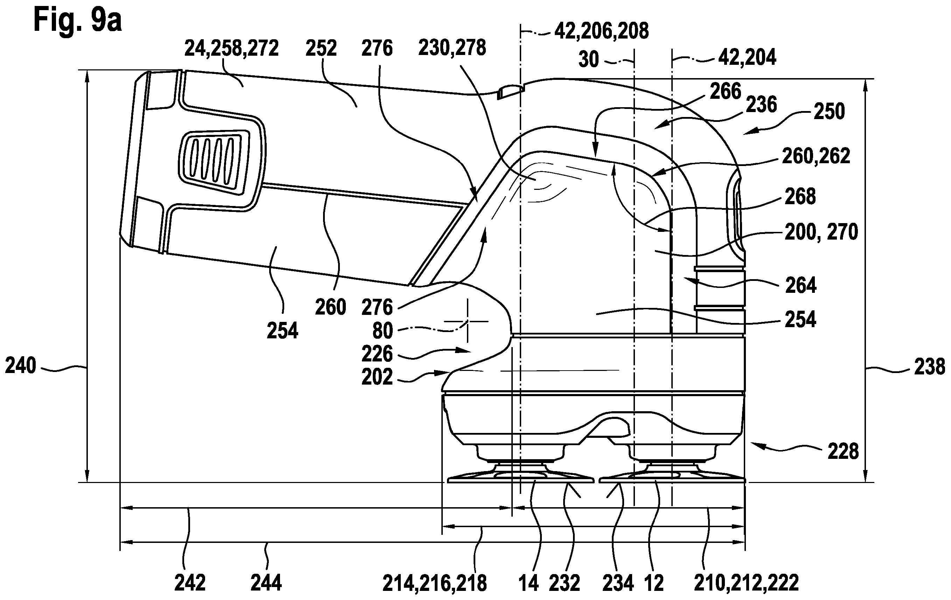

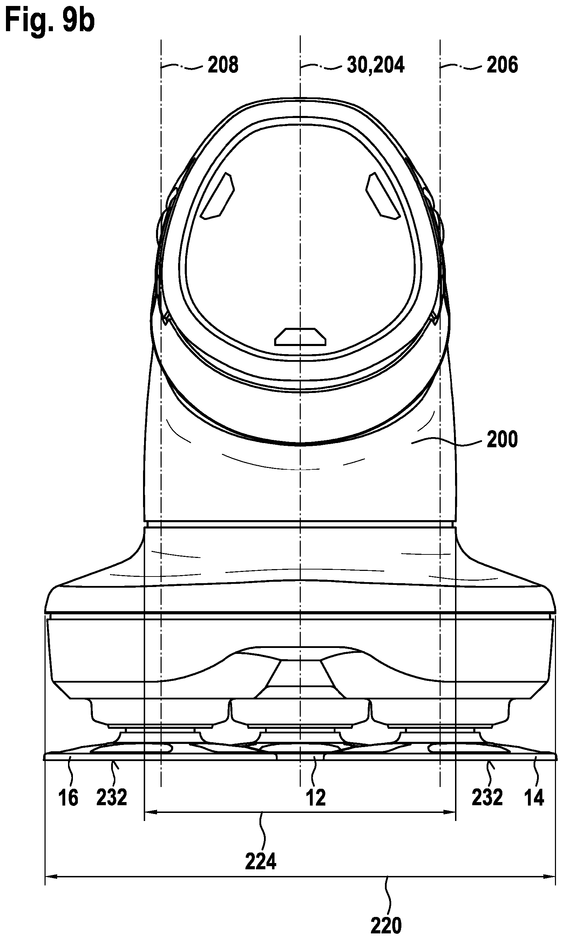

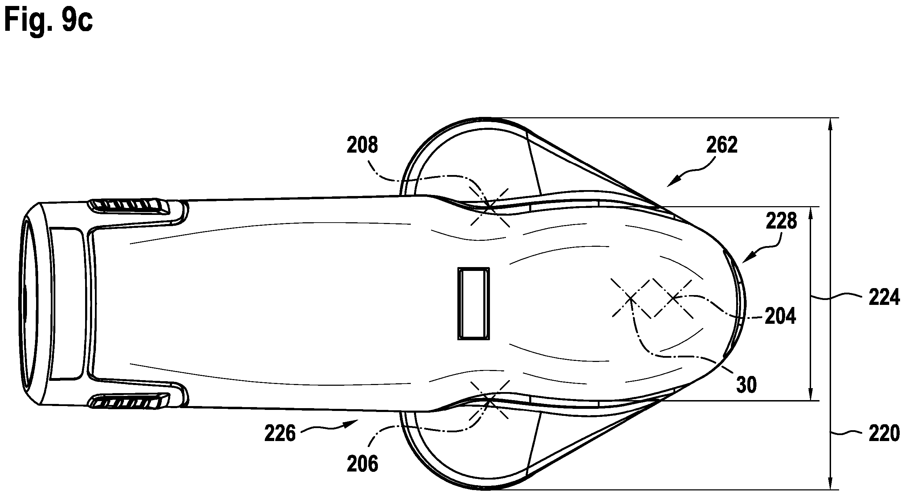

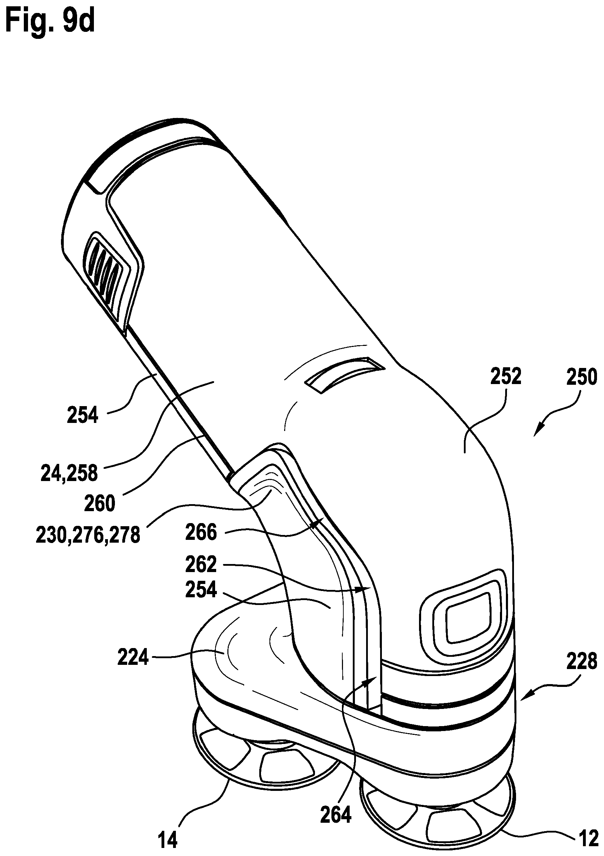

Fig. 9 Abbildung a-d zeigt die Handwerkzeugmaschine, bzw. den Schleifer 10 der vorherigen Figuren in einer schattierten Darstellung um auch Wölbungen sichtbar zu machen. Abbildung 9a zeigt den Schleifer 10 in eine Seitenansicht, Abbildung 9b in einer Rückansicht, Abbildung 9c perspektivischen Ansicht und Abbildung 9d in einer Draufsicht. Der Schleifer 10 ist zum gleichzeitigen Antrieb von drei, insbesondere kippbarer, rotierend und/oder oszillierend und/oder zufällig kreisförmig angetriebener Schleifteller 12, 14, 16, aufweisend zumindest ein Abtriebswellengehäuse 202, welches im Wesentlichen drei Abtriebswellen 40 (hier nicht dargestellt, vgl. insbesondere Fig. 2) orthogonal zu den Abtriebswellenachsen 42, 202, 204, 206 umschließt und ein Motorgehäuse 200, dass im Wesentlichen den Motor 26 orthogonal zur Motorwellenachse 30 umschließt. Der Schleifer 10 weist einen Handgriff 24 auf. Die frontseitige Abtriebswellenachse 42, 204 ist von den rückwärtigen Abtriebswellenachsen 42, 206, 208 durch die zusätzlichen Bezugszeichen besser zu unterscheiden. Das Abtriebswellengehäuse 202 umschließt die drei Abtriebswellen 40 zumindest im Wesentlichen orthogonal zu den Abtriebswellenachsen 42. Das Motorgehäuse 200 umschließt den Motor 26 zumindest im Wesentlichen orthogonal zur Motorwellenachse 30.

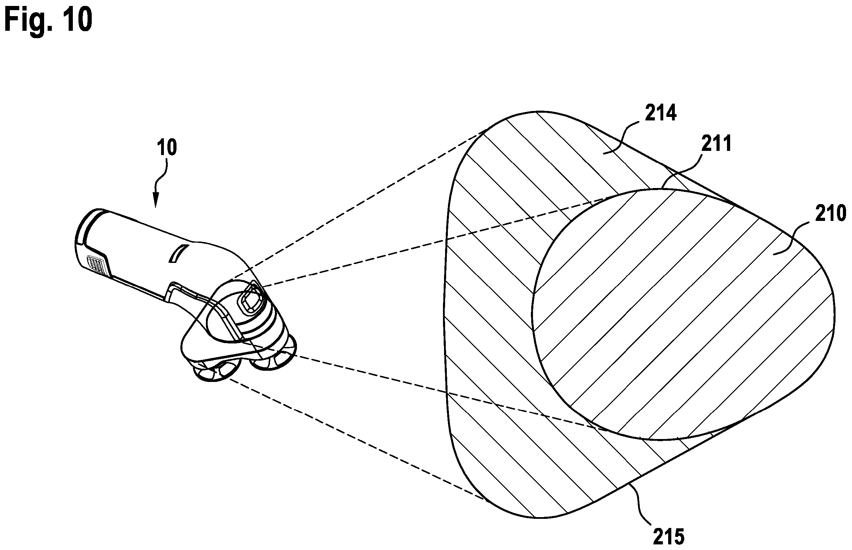

Eine Schnittfläche 210 des Motorgehäuse 200 orthogonal zur Motorwellenachse 30 in einem eingeschnürten Bereich 212 des Motorgehäuses 200 beträgt relativ zu einer Schnittfläche 214 des Abtriebswellengehäuses 202 orthogonal zu den Abtriebswellenachsen 42 in einem ausgedehnten des Abtriebswellengehäuses 202, insbesondere dem ausgedehntesten Bereich 216 des Abtriebswellengehäuses 202, weniger als 70 %, insbesondere weniger als 65 %, bevorzugt weniger als 55%. In der dargestellten Fig. 10 beträgt es rund 52%. Unter dem ausgedehnten Bereich 216 ist insbesondere der Bereich mit der größten Schnittfläche 214 des Abtriebswellengehäuses 202 zu verstehen. Somit ist in diesem Bereich 216 eine Ausdehnung z.B. die Länge 218 oder die Umfangsstrecke bzw. -länge 215 um das Abtriebswellengehäuse 202, maximal. Ferner ist in der Seiten-, der Rück- und der Draufsicht der Abbildung 9a-c auch eine Länge und eine Breite des Motorgehäuses 200 im eingeschnürten Bereich 212 sowie des Abtriebswellengehäuses 202 im ausgedehnten Bereich 216 mit den folgenden Bezugszeichen versehen: Abtriebswellengehäuse 202: Länge 218, Breite 220; Motorgehäuse: Länge 222, Breite 224. Im Verhältnis ist der ausgedehnte Bereich 216 des Abtriebswellengehäuses 202 gegenüber dem eingeschnürten Bereich 212 des Motorgehäuses 200 rund 30% länger und rund 65% breiter. Auch das Schnittflächenverhältnis des ausgedehnten Bereichs 216 des Abtriebswellengehäuses 202 gegenüber dem eingeschnürten Bereich 212 des Motorgehäuses 200 beträgt rund 190 % (vgl. Fig. 10).

Aus Fig. 10 geht auch das Schnittflächenverhältnis gewisser Bereiche hervor. Die Schnittfläche 214 des Abtriebswellengehäuses 202 in einem rückwärtigen Bereich 226 der Handwerkzeugmaschine bzw. des Schleifers 10 ist zu weniger als 75%, insbesondere zu weniger als 50 %, bevorzugt zu weniger als 25 % von der entlang der Motorwellenachse 30 projizierten Schnittfläche 210 des Motorgehäuses 200 insbesondere im eingeschnürten Bereich 212, überdeckt. Analog ist die Schleiffläche 232 von rückwärtig am Schleifer 10 applizierten Schleiftellern 14, 16 zu weniger als 75%, insbesondere zu weniger als 50 %, bevorzugt zu weniger als 25 % von der entlang der Motorwellenachse 30 projizierten Schnittfläche 210 des Motorgehäuses 200, insbesondere im eingeschnürten Bereich 212, überdeckt. In einem frontseitigen Bereich 228 der Handwerkzeugmaschine überdeckt die entlang der Motorwellenachse 30 projizierten Schnittfläche 210 des Motorgehäuses 200, insbesondere auch im eingeschnürten Bereich 212, die Schnittfläche 214 des Abtriebswellengehäuses 202 zu mehr als 70%, insbesondere zu mehr als 90%, bevorzugt vollständig. Analog ist die Schleiffläche 234 von einem frontseitig am Schleifer 10 applizierten Schleifteller 12 zu mehr als 70%, insbesondere zu mehr als 90%, bevorzugt vollständig von der entlang der Motorwellenachse 30 projizierten Schnittfläche 210 des Motorgehäuses 200, insbesondere auch im eingeschnürten Bereich 212, überdeckt.

Ferner geht aus Fig. 10 auch ein Umfangslänge 211 des Motorgehäuse 200 orthogonal zur Motorwellenachse 30 oder den Abtriebswellenachsen 42 in einem insbesondere eingeschnürten Bereich 212 des Motorgehäuses 200 relativ zu einer Umfangslänge 215 des Abtriebswellengehäuses 202 orthogonal zu den Abtriebswellenachsen 42, 204, 206, 208 in einem insbesondere ausgedehnten Bereich 216 des Abtriebswellengehäuses 202 hervor. Es beträgt weniger als 80 %, hier in etwa 70 %. Anders ausgedrückt beträgt die Umfangslänge 215 des Abtriebswellengehäuses 202 gegenüber der Umfangslänge 211 des Motorgehäuse 200 im eingeschnürten Bereich 212, rund 145%.

Des Weiteren liegen eine, insbesondere zwei der drei Abtriebswellenachsen 42, insbesondere die rückwärtigen zwei Abtriebswellenachsen 206, 208 der Handwerkzeugmaschine, außerhalb des Motorgehäuses 200, insbesondere außerhalb des eingeschnürten Bereichs 212 des Motorgehäuses 200. Diese Abtriebswellenachsen 206, 208 schneiden somit das Motorgehäuse 200 zumindest nicht im eingeschnürten Bereich 212, insbesondere nirgends. Ferner liegen insbesondere eine, bevorzugt zwei der drei Abtriebswellenachsen 204, 206, 208 insbesondere die rückwärtigen zwei Abtriebswellenachsen 206, 208 der Handwerkzeugmaschine bzw. des Schleifers 10, außerhalb des Handgriffs 24, insbesondere des stabförmigen Handgriffs 24. Sie liegen auch außerhalb eines eingedellten Bereichs 230 bzw. einer konkaven Einbuchtung des Handgriffs 24 und/oder Motorgehäuses 200 bzw. eines eingedellten Übergangsbereichs 276 von Handgriff 24 und Motorgehäuse 200. Die frontseitige Abtriebswellenachse 204 der Handwerkzeugmaschine bzw. des Schleifers 10, liegt innerhalb des Motorgehäuses 200 und/oder innerhalb eines Motorgehäusehandgriffs 236 - schneidet dieses/diesen also.

Aus der Seitenansicht gemäß Fig. 9a geht ferner hervor, dass das Verhältnis der Höhe 238, 240 der Handwerkzeugmaschine in Richtung der Abtriebswellenachsen 42, 204, 206, 208, insbesondere eine Höhe 238 eines Motor- und Abtriebswellengehäuses 200, 202, zur Länge 242 eines im Wesentlichen stabförmigen Handgriffs 24, insbesondere eine Länge 242 eines im Wesentlichen orthogonal zum Motorgehäuse 200 bzw. der An- und Abtriebswellenachse 30, 204 abstehenden stabförmigen Handgriffs 24, um weniger als 50% abweicht, insbesondere um weniger als 75% abweicht, bevorzugt um weniger als 85% abweicht, insbesondere in etwa identisch ist. Unter einem im Wesentlichen orthogonal zu der oder den An- und Abtriebswellenachse 30, 204 abstehenden stabförmigen Handgriffs soll hier in einem Winkelbereich von 60°-120°, insbesondere von 75°-105°, bevorzugt 90° bezogen auf die An- und Abtriebswellenachse(n) 30, 204, 206, 208 verstanden werden. Vorteilhaft kann dadurch eine sehr kompakte Handwerkzeugmaschine bereitgestellt werden. Der Schwerpunkt S rückt somit möglichst dicht an die Schleifteller 12, 14, 16. Ferner ist ein Verhältnis eine Gesamtlänge 244 der Handwerkzeugmaschine orthogonal zu zumindest einer An- oder Abtriebswellenachse 30, 42, 204, 206, 208, insbesondere von einem Ende des Motorgehäuses 200 bis zu einem Ende des stabförmig abstehenden Handgriffs 24, relativ zu einer Höhe 238, 240 der Handwerkzeugmaschine entlang zumindest einer Richtung der An- oder Abtriebswellenachse 30, 42, 204, 206, 208, insbesondere von einer Schleiftellerebene 112 bis zum Endes des Handgriffs 24 bzw. Motorgehäuses 200, größer ist als 10%, insbesondere größer ist als 25%, bevorzugt rund 40% größer ist.

Des Weiteren beträgt das Gewicht des Akkumulators 72 relativ zu den Komponenten des Antriebsstrangs, insbesondere umfassend den Motor 26, das Ritzel 32, das Zentralrad 34, die Abtriebswellen 40 und Stirnräder 44, rund 10-50% mehr, insbesondere 30-40% mehr. Dadurch kann die Lage des Schwerpunkts S positiv beeinfluss werde. Ein Volumen von Motor- und Abtriebswellengehäuse 200, 202 gegenüber dem stabförmigen Handgriffgehäuse 68 beträgt rund 20-70% mehr, insbesondere rund 50% mehr.

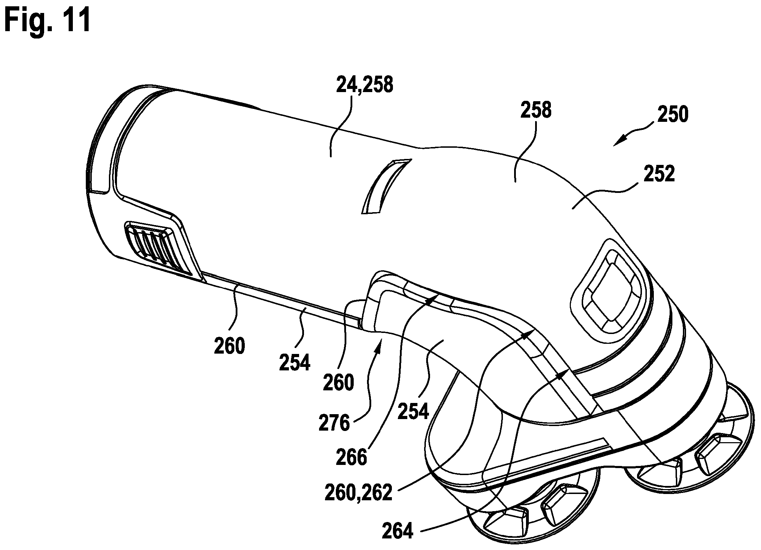

Aus der Seitenansicht und der perspektivischen Ansicht gemäß Fig. 9a,d, sowie der Fig. 11, geht ferner ein Schleifmaschinengehäuse 250 mit zumindest einem Gehäuseschalenelement 252 und mit zumindest einem mit dem Gehäuseschalenelement 252 verbundenes weiteres Gehäuseschalenelement 254 hervor, die zumindest abschnittsweise einen Handgriff 24, 258 ausbilden. Das Schleifmaschinengehäuse 250 ist gekennzeichnet durch zumindest eine zumindest abschnittsweise im Bereich einer Trennkante 260 des Gehäuseschalenelements 252 und des weiteren Gehäuseschalenelements 254 gebildete Belüftungsöffnung 262, insbesondere einen Lüftungsschlitz. Die Belüftungsöffnung 262 erstreckt sich vorteilhaft über zwei Bereiche 264, 266, die in einem Winkel 268, insbesondere einem Winkel 268 (vgl. Fig. 10, Seitenansicht) zwischen 90° und 120°, bevorzugt zwischen 100° und 105° zueinander angeordnet sind. Vorteilhaft lehnt sich der Winkel an die Ausrichtung des stabförmigen Handgriffs zum Motorgehäuse an. Die Belüftungsöffnungsbereiche sind vorteilhaft parallel zu deren Haupterstreckung ausgerichtet. Vorteilhaft ist die Belüftungsöffnung 262, insbesondere die des Abschnitts 266 im Bereich des Handgriffs 258 dazu vorgesehen die Hand eines Anwenders zu umströmen, insbesondere zu kühlen, zu wärmen und/oder zu trocknen.

Das Gehäuseschalenelement 252 und das weitere Gehäuseschalenelement 254, sind insbesondere entlang einer zumindest im Wesentlichen gesamten Kontaktlinie und/oder -fläche des Gehäuseschalenelements 252 und des weiteren Gehäuseschalenelements 254, zumindest im Wesentlichen frei von sichtbaren Befestigungselementen miteinander verbunden, insbesondere aneinander fixiert. Ferner ist der Handgriff 24, 258 zumindest auf einer, einer Schleifteller 12, 14, 16 bzw. Werkzeugseite zugewandten und/oder abgewandten Seite des Handgriffs 24, 258 zumindest im Wesentlichen trennkantenfrei ausgebildet.

Ferner weist das Schleifmaschinengehäuse 250 einen Motorgehäuseabschnitt 270 und einen stabförmigen Handgriffgehäuseabschnitt 272 auf, wobei das Schleifmaschinengehäuse 250 in einem Übergangsbereich 276 zwischen dem stabförmigen Handgriffgehäuseabschnitt 272 und dem Motorgehäuseabschnitt 270 eine konkave Einbuchtung 278 bzw. eine Delle aufweist (vgl. Fig. 10). Diese dient als ergonomische Anlagefläche für einen Finger, insbesondere einen Daumen des Anwenders. Die Delle ist insbesondere in der Seitenansicht der Fig. 9a gut zu erkennen. Die Schattierung deuted die gewölbten Bereiche an. Vorzugsweise ist/sind die Belüftungsöffnung/en 262 durch einen Versatz einer Gehäusekante des Gehäuseschalenelements 252 und des weiteren Gehäuseschalenelements 254 bildbar.

## Patentansprüche

1. Handwerkzeugmaschine, insbesondere Schleifer (10), zum gleichzeitigen Antrieb mehrerer, bevorzugt zum Antrieb von drei, insbesondere kippbarer, rotierend und/oder oszillierend und/oder zufällig kreisförmig angetriebener Schleifteller (12, 14, 16), aufweisend zumindest ein Gehäuseteil (60), welches Schleiftelleraufnahmebereiche (102) und/oder Öffnungen (100) aufweist in denen oder durch die hindurchragend Schleiftelleraufnahmen (56) und/oder Abtriebswellen (40) zum Antrieb der Schleifteller (12, 14, 16) angeordnet sind, wobei das zumindest eine Gehäuseteil (60), zwischen zumindest zwei benachbarten Schleiftelleraufnahmebereichen (102) und/oder Öffnungen (100) eine Vertiefung (108) aufweist, insbesondere eine konkave Vertiefung (108), **dadurch gekennzeichnet, dass** die Vertiefung (108) zumindest einen Teil eines Luftführungskanals (120), insbesondere einen Teil eines Luftführungskanals (120) zur Staubabsaugung, bildetund das Maß der Vertiefung (108) im Gehäuseteil (60) von einem Zentrumsbereich (114) des Gehäuseteils (60) nach radial außen in Richtung eines Rands (116) des Gehäuseteils (60) zunimmt.

2. Handwerkzeugmaschine nach Anspruch 1, **dadurch gekennzeichnet, dass** eine Anzahl an Vertiefungen (108) einer Anzahl an Öffnungen (100) und/oder einer Anzahl an Schleiftelleraufnahmen (56) entspricht, insbesondere wobei die Vertiefungen (108) im Zwischenraum (122) zwischen jeweils benachbarten Öffnungen (100) und/oder Schleiftelleraufnahmebereichen (102) angeordnet sind.

3. Handwerkzeugmaschine nach einem der vorhergehenden Ansprüche,
**dadurch gekennzeichnet, dass** die Vertiefung (108) eine berührungsfreie Verkippung (124) der Schleifteller (12, 14, 16) relativ zum Gehäuseteil (60) gewährleistet.

4. Handwerkzeugmaschine nach einem der vorhergehenden Ansprüche,
**dadurch gekennzeichnet, dass** eine Gehäusetrennkante (126), insbesondere eine Gehäusetrennfuge (130), zwischen dem zumindest einen Gehäuseteil (60) und einem weiteren Gehäuseteil (62), ein Formschlusselement (132), insbesondere eine Rastnut (134), zur Aufnahme eines korrespondierenden Formschlusselements (136), insbesondere eines Rastfortsatzes (140), einer Staubabsaughaube (138) dient.

5. Handwerkzeugmaschine nach Anspruch 4, **dadurch gekennzeichnet, dass** eine Vertiefung (108) im Gehäuseteil (60) als weiteres Formschlusselement (142), insbesondere als Anschlagelement (144), für ein weiteres korrespondierendes Formschlusselement (146) der Staubabsaughaube (138) dient.

6. Handwerkzeugmaschine nach einem der vorhergehenden Ansprüche,
**dadurch gekennzeichnet, dass** die Handwerkzeugmaschine eine insbesondere abnehmbare Staubabsaughaube (138) aufweist, welche einen Stutzen (148) zur Verbindung mit einer Staubabsaugvorrichtung umfasst, welcher nach außerhalb (149) der Staubabsaughaube (138) ragt und eine vom Stutzen (148) ausgehende Absaugöffnung (150) aufweist, welche zum Inneren (152) der Staubabsaughaube (138) hin geöffnet ist, insbesondere wobei die Staubabsaughaube (138) eine im Wesentlichen dreieckige Geometrie aufweist.

7. Handwerkzeugmaschine nach Anspruch 6, **dadurch gekennzeichnet, dass** die Staubabsaughaube (138) einen Fortsatz (158) im Bereich der Absaugöffnung (150) zur Querluftstromvermeidung aufweist, der in das Innere (152) bzw. Zentrum der Staubabsaughaube (138) ragt.

8. Handwerkzeugmaschine nach Anspruch 7, **dadurch gekennzeichnet, dass** der Fortsatz (158) ausgehend von der Staubabsaughaube (138) und/oder der Absaugöffnung (150) eine Haupterstreckungsrichtung (160) in das Innere (152) bzw. das Zentrum der Staubabsaughaube (138) aufweist und/oder dass der Fortsatz (158) zumindest eine Wandung (162), insbesondere mehrere Wandungen (162) aufweist, die der Querluftstromverminderung dienen, insbesondere zur Querluststromverminderung von unterhalb (184) der Staubabsaughaube (138) und/oder von seitlich (164) innerhalb der Staubabsaughaube (138).

9. Handwerkzeugmaschine nach einem der Ansprüche 7 oder 8, **dadurch gekennzeichnet, dass** der Fortsatz (158) und/oder die Wandung (162) zumindest teilweise seitlich (166) geöffnet sind, insbesondere zur Querluftstromermöglichung in zumindest diesem geöffneten Bereich (170, 172).

10. Handwerkzeugmaschine nach einem der Ansprüche 7-9, **dadurch gekennzeichnet, dass** die Staubabsaughaube (138), bzw. der Rahmen (174) der Staubabsaughaube (138) flexibel ist, insbesondere in Richtung des Inneren (152) bzw. Zentrums der Staubabsaughaube (138), insbesondere zur Erzeugung einer Vorspannung und/oder eines Anpressens der Staubabsaughaube (138) und/oder von Formschlusselementen (136, 146) der Staubabsaughaube (138) und/oder des Rahmens (174) der Staubabsaughaube (138), an das Gehäuse der Handwerkzeugmaschine, insbesondere zur werkzeuglosen und/oder sicheren und/oder spaltarmen Verbindung mit dieser.

11. Handwerkzeugmaschine nach einem der Ansprüche 6-10, **dadurch gekennzeichnet, dass** die Staubabsaughaube (138) als Distanzhalter und/oder Anschlagschutz für die Handwerkzeugmaschine ausgebildet ist.

12. Handwerkzeugmaschine nach einem der Ansprüche 6-11, aufweisend eine Griffkontur (176) auf der Außenseite (149) der Staubabsaughaube (138), wobei die Griffkontur (176) im Wesentlichen der Silhouettenkontur (178) zumindest eines Bereichs der Handwerkzeugmaschine entspricht, insbesondere wobei die Griffkontur (176) zumindest im Wesentlichen der Silhouettenkontur (178) einer Vertiefung (108) der Handwerkzeugmaschine entspricht.

13. Handwerkzeugmaschine nach einem der Ansprüche 6-12, wobei die Staubabsaughaube (138) zur lösbaren Verbindung mit einem Gehäuse der Handwerkzeugmaschine mittels zumindest eines Formschluss- und/oder Kraftschluss- und/oder Reibschlusselements ausgebildet ist und die Staubabsaughaube (138) über ein insbesondere elastisches Verbindungselement (179), insbesondere ein elastisches Band (180) im Bereich eines Stutzens (148) oder Stutzenadapters (182) und einem freien Ende (70) eines Handgriffs (24) der Handwerkzeugmaschine, mit der Handwerkzeugmaschine verbunden ist, insbesondere wobei das insbesondere elastische Verbindungselement (179) mit der Handwerkzeugmaschine oder der Staubabsaughaube (138) verliersicher verbunden ist.

## Claims

1. Hand-held power tool, in particular sander (10), for simultaneously driving multiple, preferably for driving three, in particular tiltable sanding discs (12, 14, 16) which are driven in a rotating and/or oscillating and/or randomly circular manner, having at least one housing part (60) which has sanding-disc-receptacle regions (102) and/or openings (100) in which or projecting through which are arranged sanding-disc receptacles (56) and/or output shafts (40) for driving the sanding discs (12, 14, 16), wherein the at least one housing part (60) has between at least two adjacent sanding-disc-receptacle regions (102) and/or openings (100) a depression (108), in particular a concave depression (108), **characterized in that** the depression (108) forms at least a part of an air-guiding channel (120), in particular a part of an air-guiding channel (120) for extraction of dust by suction, and there is an increase in the dimension of the depression (108) in the housing part (60) from a centre region (114) of the housing part (60) radially outwards in the direction of a periphery (116) of the housing part (60).

2. Hand-held power tool according to Claim 1, **characterized in that** a number of depressions (108) corresponds to a number of openings (100) and/or to a number of sanding-disc receptacles (56), in particular wherein the depressions (108) are arranged in the interspace (122) between in each case adjacent openings (100) and/or sanding-disc-receptacle regions (102).

3. Hand-held power tool according to either of the preceding claims, **characterized in that** the depression (108) ensures contact-free tilting (124) of the sanding discs (12, 14, 16) relative to the housing part (60).

4. Hand-held power tool according to one of the preceding claims, **characterized in that** a housing separating edge (126), in particular a housing parting joint (130), between the at least one housing part (60) and a further housing part (62), a form-fit element (132), in particular a latching groove (134), serves for receiving a corresponding form-fit element (136), in particular a latching extension (140), of a dust-suction-extraction hood (138).

5. Hand-held power tool according to Claim 4, **characterized in that** a depression (108) in the housing part (60) serves as a further form-fit element (142), in particular as a stop element (144), for a further corresponding form-fit element (146) of the dust-suction-extraction hood (138).

6. Hand-held power tool according to one of the preceding claims, **characterized in that** the hand-held power tool has an in particular removable dust-suction-extraction hood (138) which comprises a connecting piece (148) for connection to a dust-suction-extraction device, said connecting piece projecting to the outside (149) of the dust-suction-extraction hood (138) and having a suction-extraction opening (150) which proceeds from the connecting piece (148) and is open towards the interior (152) of the dust-suction-extraction hood (138), in particular wherein the dust-suction-extraction hood (138) has a substantially triangular geometry.

7. Hand-held power tool according to Claim 6, **characterized in that** the dust-suction-extraction hood (138) has an extension (158) in the region of the suction-extraction opening (150) for avoidance of transverse air flow, said extension projecting into the interior (152) or centre of the dust-suction-extraction hood (138).

8. Hand-held power tool according to Claim 7, **characterized in that** the extension (158), proceeding from the dust-suction-extraction hood (138) and/or the suction-extraction opening (150), has a main extent direction (160) into the interior (152) or the centre of the dust-suction-extraction hood (138), and/or **in that** the extension (158) has at least one wall (162), in particular multiple walls (162), which serve for reducing transverse air flow, in particular for reducing transverse air flow from below (184) the dust-suction-extraction hood (138) and/or from the side (164) within the dust-suction-extraction hood (138).

9. Hand-held power tool according to either of Claims 7 and 8, **characterized in that** the extension (158) and/or the wall (162) are/is open at least partially at the side (166), in particular for making possible transverse air flow in at least this open region (170, 172).

10. Hand-held power tool according to one of Claims 7-9, **characterized in that** the dust-suction-extraction hood (138) or the frame (174) of the dust-suction-extraction hood (138) is flexible, in particular in the direction of the interior (152) or centre of the dust-suction-extraction hood (138), in particular for generating a preload and/or pressing of the dust-suction-extraction hood (138) and/or form-fit elements (136, 146) of the dust-suction-extraction hood (138) and/or of the frame (174) of the dust-suction-extraction hood (138) against the housing of the hand-held power tool, in particular for tool-free and/or secure and/or small-gap connection thereto.

11. Hand-held power tool according to one of Claims 6-10, **characterized in that** the dust-suction-extraction hood (138) is in the form of a spacer and/or impact protector for the hand-held power tool.

12. Hand-held power tool according to one of Claims 6-11, having a gripping contour (176) on the outer side (149) of the dust-suction-extraction hood (138), wherein the gripping contour (176) corresponds substantially to the silhouette contour (178) at least of a region of the hand-held power tool, in particular wherein the gripping contour (176) corresponds at least substantially to the silhouette contour (178) of a depression (108) of the hand-held power tool.

13. Hand-held power tool according to one of Claims 6-12, wherein the dust-suction-extraction hood (138) is configured for releasable connection to a housing of the hand-held power tool by means of at least one form-fit element and/or force-fit element and/or frictionally engaging element, and the dust-suction-extraction hood (138) is connected via an in particular elastic connecting element (179), in particular an elastic band (180), in the region of a connecting piece (148) or connecting-piece adaptor (182) and in a free end (70) of a handle (24) of the hand-held power tool, to the hand-held power tool, in particular wherein the in particular elastic connecting element (179) is connected captively to the hand-held power tool or to the dust-suction-extraction hood (138).

## Revendications

1. Machine-outil à main, notamment meuleuse (10), pour l'entraînement simultané de plusieurs, de préférence pour l'entraînement de trois, plateaux de meulage (12, 14, 16) notamment basculants, entraînés en rotation et/ou en oscillation et/ou de manière circulaire aléatoire, présentant au moins une partie de boîtier (60) qui présente des zones de réception de plateau de meulage (102) et/ou des ouvertures (100) dans lesquelles ou à travers lesquelles sont agencés des logements de plateau de meulage (56) et/ou des arbres de sortie (40) pour l'entraînement des plateaux de meulage (12, 14, 16), l'au moins une partie de boîtier (60) présentant un renfoncement (108) entre au moins deux zones de réception de plateau de meulage (102) et/ou ouvertures (100) voisines, notamment un renfoncement concave (108), **caractérisée en ce que** le renfoncement (108) forme au moins une partie d'un canal de guidage d'air (120), notamment une partie d'un canal de guidage d'air (120) pour l'aspiration de poussière,et la dimension du renfoncement (108) dans la partie de boîtier (60) augmente depuis une zone centrale (114) de la partie de boîtier (60) radialement vers l'extérieur en direction d'un bord (116) de la partie de boîtier (60).

2. Machine-outil à main selon la revendication 1, **caractérisée en ce qu'**un nombre de renfoncements (108) correspond à un nombre d'ouvertures (100) et/ou à un nombre de logements de plateau de meulage (56), les renfoncements (108) étant notamment agencés dans l'espace intermédiaire (122) entre des ouvertures (100) et/ou des zones de logement de plateau de meulage (102) respectivement voisines.

3. Machine-outil à main selon l'une quelconque des revendications précédentes, **caractérisée en ce que** le renfoncement (108) assure un basculement (124) sans contact des plateaux de meulage (12, 14, 16) par rapport à la partie de boîtier (60).

4. Machine-outil à main selon l'une quelconque des revendications précédentes, **caractérisée en ce qu'**un bord de séparation de boîtier (126), notamment un joint de séparation de boîtier (130), entre l'au moins une partie de boîtier (60) et une autre partie de boîtier (62), sert d'élément de liaison par complémentarité de forme (132), notamment de rainure d'encliquetage (134), pour recevoir un élément de liaison par complémentarité de forme (136) correspondant, notamment un prolongement d'encliquetage (140), d'un capot d'aspiration de poussière (138).

5. Machine-outil à main selon la revendication 4, **caractérisée en ce qu'**un renfoncement (108) dans la partie de boîtier (60) sert d'autre élément de liaison par complémentarité de forme (142), notamment d'élément de butée (144), pour un autre élément de liaison par complémentarité de forme (146) correspondant du capot d'aspiration de poussière (138).

6. Machine-outil à main selon l'une quelconque des revendications précédentes, **caractérisée en ce que** la machine-outil à main présente un capot d'aspiration de poussière (138), notamment amovible, qui comprend un embout (148) pour la liaison à un dispositif d'aspiration de poussière, qui fait saillie vers l'extérieur (149) du capot d'aspiration de poussière (138) et présente une ouverture d'aspiration (150) partant de l'embout (148), qui est ouverte vers l'intérieur (152) du capot d'aspiration de poussière (138), le capot d'aspiration de poussière (138) présentant notamment une géométrie essentiellement triangulaire.

7. Machine-outil à main selon la revendication 6, **caractérisée en ce que** le capot d'aspiration de poussière (138) présente un prolongement (158) dans la zone de l'ouverture d'aspiration (150) pour éviter le flux d'air transversal, qui fait saillie à l'intérieur (152) ou au centre du capot d'aspiration de poussière (138).

8. Machine-outil à main selon la revendication 7, **caractérisée en ce que** le prolongement (158) présente, en partant du capot d'aspiration de poussière (138) et/ou de l'ouverture d'aspiration (150), une direction d'extension principale (160) vers l'intérieur (152) ou vers le centre du capot d'aspiration de poussière (138) et/ou **en ce que** le prolongement (158) présente au moins une paroi (162), notamment plusieurs parois (162), qui servent à la réduction du flux d'air transversal, notamment à la réduction du flux d'air transversal provenant d'en dessous (184) du capot d'aspiration de poussière (138) et/ou de latéralement (164) à l'intérieur du capot d'aspiration de poussière (138).

9. Machine-outil à main selon l'une quelconque des revendications 7 ou 8, **caractérisée en ce que** le prolongement (158) et/ou la paroi (162) sont au moins partiellement ouverts latéralement (166), notamment pour permettre le flux d'air transversal dans au moins cette zone ouverte (170, 172).

10. Machine-outil à main selon l'une quelconque des revendications 7 à 9, **caractérisée en ce que** le capot d'aspiration de poussière (138) ou le cadre (174) du capot d'aspiration de poussière (138) est flexible, notamment en direction de l'intérieur (152) ou du centre du capot d'aspiration de poussière (138), notamment pour produire une précontrainte et/ou un pressage du capot d'aspiration de poussière (138) et/ou d'éléments de liaison par complémentarité de forme (136, 146) du capot d'aspiration de poussière (138) et/ou du cadre (174) du capot d'aspiration de poussière (138) contre le boîtier de la machine-outil à main, notamment pour une liaison sans outil et/ou sûre et/ou avec peu de fentes avec celle-ci.

11. Machine-outil à main selon l'une quelconque des revendications 6 à 10, **caractérisée en ce que** le capot d'aspiration de poussière (138) est réalisée sous forme d'entretoise et/ou de protection de butée pour la machine-outil à main.

12. Machine-outil à main selon l'une quelconque des revendications 6 à 11, présentant un contour de préhension (176) sur le côté extérieur (149) du capot d'aspiration de poussière (138), le contour de poignée (176) correspondant essentiellement au contour de silhouette (178) d'au moins une zone de la machine-outil à main, le contour de préhension (176) correspondant notamment au moins essentiellement au contour de silhouette (178) d'un renfoncement (108) de la machine-outil à main.

13. Machine-outil à main selon l'une quelconque des revendications 6 à 12, dans laquelle le capot d'aspiration de poussière (138) est réalisé pour être relié de manière amovible à un boîtier de la machine-outil à main au moyen d'au moins un élément de liaison par complémentarité de forme et/ou par adhérence et/ou par friction, et le capot d'aspiration de poussière (138) est relié par l'intermédiaire d'un élément de liaison (179) notamment élastique, notamment d'une bande élastique (180) dans la zone d'un embout (148) ou d'un adaptateur d'embout (182) et d'une extrémité libre (70) d'une poignée (24) de la machine-outil à main, à la machine-outil à main, l'élément de liaison (179) notamment élastique étant notamment relié à la machine-outil à main ou au capot d'aspiration de poussière (138) de manière imperdable.
